(19) Europäisches Patentamt
European Patent Office
Office européen des brevets

(11) EP 3 490 031 A1

## (12) EUROPEAN PATENT APPLICATION
published in accordance with Art. 153(4) EPC

(43) Date of publication:
29.05.2019 Bulletin 2019/22

(21) Application number: 17845205.8

(22) Date of filing: 14.08.2017

(51) Int Cl.:
$H01M\ 2/14$ (2006.01)   $H01M\ 2/16$ (2006.01)
$H01M\ 10/052$ (2010.01)

(86) International application number:
PCT/CN2017/097404

(87) International publication number:
WO 2018/040903 (08.03.2018 Gazette 2018/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.08.2016 CN 201610750611

(71) Applicant: BYD Company Limited
Shenzhen, Guangdong 518118 (CN)

(72) Inventors:
• HU, Jialing
  Shenzhen
  Guangdong 518118 (CN)
• LIU, Ronghua
  Shenzhen
  Guangdong 518118 (CN)
• SHAN, Jun
  Shenzhen
  Guangdong 518118 (CN)
• HE, Long
  Shenzhen
  Guangdong 518118 (CN)

(74) Representative: Hoffmann Eitle
Patent- und Rechtsanwälte PartmbB
Arabellastraße 30
81925 München (DE)

(54) LITHIUM ION BATTERY SEPARATOR AND PREPARATION METHOD THEREFOR, AND LITHIUM ION BATTERY

(57) The disclosure relates to the field of lithium-ion batteries, and discloses a lithium-ion battery separator, a method for preparing same, and a lithium-ion battery. The lithium-ion battery separator includes: a porous basement membrane, and a heat-resistant layer covering at least one side surface of the porous basement membrane, where the heat-resistant layer contains a high-temperature-resistant polymer and inorganic nanometer particles; and the heat-resistant layer has a fiber-network shaped structure.

FIG. 1

EP 3 490 031 A1

**Description**

**CROSS-REFERENCE TO RELATED APPLICATIONS**

This application claims priority to and benefits of Chinese Patent Application No. 201610750611.7, filed with the State Intellectual Property Office of P. R. China on August 29, 2016. The entire content of the above-referenced application is incorporated herein by reference.

**FIELD**

The disclosure relates to the field of lithium-ion batteries, and specifically, to a lithium-ion battery separator, a method for preparing same, and a lithium-ion battery.

**BACKGROUND**

A lithium-ion battery is mainly formed by a positive/negative electrode material, an electrolyte, a membrane, and a battery case packaging material. The membrane is an important component of the lithium-ion battery, and is configured to play a role of separating positive and negative electrodes, to prevent the battery from being internally short-circuited; and allowing ions of the electrolyte to pass freely, to complete an electrochemical charge/discharge process. The performance of the membrane determines the interface structure, the internal resistance, and the like of the battery, and directly affects characteristics of the battery such as the rate performance, the cycle performance, and the safety performance (the high-temperature resistance performance). A membrane whose performance is excellent plays an important role of improving the comprehensive performance of a battery, and is referred to as a "third electrode" of the battery in the industry.

An existing lithium-ion battery separator may be formed by a polymer material by using a humidity phase transformation method. However, the melting temperature of the polymer material is usually relatively low (400°C to 500°C). As a result, the high-temperature resistance performance of a lithium-ion battery may be relatively poor. Moreover, the polymer material cannot adsorb impurities generated in the battery, for example, a reaction by-product. In view of this, in the prior art, a heat-resistant layer formed by inorganic particles and a binder is used, so as to improve the heat-resistant performance of the lithium-ion battery separator.

For example, CN103474610A disclose a method for preparing a composite lithium-ion battery separator through electrostatic spinning/electrostatic spraying. Specific steps of the method are: (1) adding a high-molecular polymer into an organic solvent, and performing mechanical stirring and dissolving, to form a transparent solution and prepare an electrostatic spinning liquid; (2) mixing inorganic nanometer particles and a high-molecular polymer adding the mixture into an organic solvent, and performing mechanical stirring, to prepare an inorganic nanometer particle suspension; and (3) performing electrostatic spinning on the spinning liquid prepared in step (1) to prepare a lower-layer nanofiber membrane, then depositing the inorganic nanometer particle suspension prepared in step (2) onto the lower-layer nanofiber membrane through electrostatic spraying, to serve as an intermediate layer, and finally receiving a layer of electrostatic spinning nanofiber membrane on the inorganic particle layer, to prepare a composite lithium-ion battery separator. A mass ratio of the inorganic nanometer particles to the high-molecular polymer in step (2) is (0.8 to 0.98):(0.2 to 0.02). However, the product cannot really improve the stability of the composite membrane at a higher temperature due to a main reason that the high-molecular polymer used for the product is one of or a mixture of at least two of PMMA, PAN, PVDF, and PVDF-HFP, where the melting point of PMMA is 130°C to 140°C, the glass transition temperature of polyacrylonitrile PAN is approximately 90°C, the carbonization temperature is approximately 200°C, and the melting point of PVDF is 170°C. As a result, the product cannot play a role of improving thermal shrinkage of the membrane at a high temperature (>180°C). Moreover, the method is: first preparing a layer of fiber membrane in the electrostatic spinning manner, then preparing an inorganic-organic composite layer by using the electrostatic spraying method, and then performing electrostatic spinning on a surface of the inorganic-organic composite layer to prepare a fiber layer. In this way, the stretching strength and the puncturing strength of the formed structure are both relatively low normally, and PVDF-HFP is swollen in an electrolyte, and cannot play a role of protection.

**SUMMARY**

An objective of the disclosure is to provide a novel lithium-ion battery separator, a method for preparing same, and a lithium-ion battery.

In an existing heat-resistant layer formed by inorganic particles and a polymer material, the heat-resistant performance of the inorganic particles is better than that of the frequently used polymer material. Therefore, to improve the high-temperature resistance performance of a lithium-ion battery separator, the inorganic particles are usually as a main component in the existing heat-resistant layer, and the polymer material has a relatively low content and only plays a role of bonding. Moreover, the bonding performance of a high-temperature polymer binder (whose melting point is high) is usually poorer than the bonding performance of a low-temperature polymer binder (whose melting point is low). Therefore, to enable the lithium-ion battery separator to have a higher strength, a low-temperature polymer is usually selected as a binder in the prior art. The inventor of the disclosure finds through in-depth research that, although this heat-resistant layer in the prior art can improve the heat-resistant performance of the lithium-ion battery separator to a particular extent, thermal shrinkage of the lithium-ion battery separator is quite large at a high temperature, causing fracture of inorganic particles and reduction in the high-temperature strength. The inventor of the disclosure further finds through in-depth research that, when a high-temperature-resistant polymer is used as a main component of the heat-resistant layer, an inorganic material is used as a modified material of the heat-resistant layer, and the heat-resistant layer is formed into a fiber-network shaped structure in an electrostatic spinning manner after the two are mixed at a particular proportion, a fiber formed by the high-temperature-resistant polymer is used as a backbone to support the strength of a membrane at a high temperature, and added inorganic nanometer particles are equivalent to anchor points to pin fibers, to further enhance the strength of the composite membrane at a high temperature, and further reduce thermal shrinkage of the membrane at a high temperature; and because the ceramic particles are of a nanometer size, movement between macromolecular chains can be limited to a particular extent, thereby improving the softening temperature of a heat-resistant macromolecule, and further enhancing the heat-resistant performance of the composite membrane. The corresponding lithium-ion battery separator not only has relatively high ion conductivity, but also can be improved in the heat-resistant performance and the mechanical strength at a high temperature. Based on this, the disclosure is completed.

Specifically, the disclosure provides a lithium-ion battery separator, wherein the lithium-ion battery separator includes: a porous basement membrane, and a heat-resistant layer covering at least one side surface of the porous basement membrane, where the heat-resistant layer contains a high-temperature-resistant polymer and inorganic nanometer particles, and the heat-resistant layer has a fiber-network shaped structure.

The disclosure further provides a method for preparing a lithium-ion battery separator, wherein the method includes:

S1: providing a porous basement membrane; and
S2: preparing a spinning solution containing a high-temperature-resistant polymer and inorganic nanometer particles, and forming a heat-resistant layer on at least one side surface of the porous basement membrane through electrostatic spinning by using the spinning solution.

Moreover, the disclosure further provides a lithium-ion battery, where the lithium-ion battery includes a positive electrode, a negative electrode, an electrolyte, and a lithium-ion battery separator located between the positive electrode and the negative electrode, and the lithium-ion battery separator is the foregoing lithium-ion battery separator.

The lithium-ion battery separator provided in the disclosure not only has quite good stability at a high temperature (>160°C) and a quite small high-temperature thermal shrinkage percentage, but also has good high-temperature mechanical strength, to be much better than the heat-resistant performance and the high-temperature mechanical strength of the composite membrane obtained through spinning by merely using a high-temperature-resistant polymer. For an ordinary ceramic (CCL) membrane, because a non-heat-resistant polymer is used, the ordinary ceramic membrane either presents quite large thermal shrinkage at a high temperature, or incurs a phenomenon that the polymer is melted and connection between the ceramic particles is incompact at a high temperature. As a result, the entire lithium-ion battery separator does not have quite high mechanical strength. Moreover, a process for preparing the lithium-ion battery separator provided in the disclosure is relatively simple, and the obtained lithium-ion battery separator has relatively good toughness, and is rolled up easily.

Other features and advantages of the disclosure are described in detail in the subsequent specific implementations.

## BRIEF DESCRIPTION OF THE DRAWINGS

The accompanying drawing is used to further understand the disclosure and constitute a part of the specification, and is used to explain the disclosure together with the following specific implementations, but does not constitute a limitation on the disclosure. In the accompanying drawings:

FIG. 1 is a scanning electron micrograph picture of a heat-resistant layer obtained according to Embodiment 1, where a magnification factor is 10000; and
FIG. 2 is a scanning electron micrograph picture of a heat-resistant layer obtained according to Embodiment 1, where a magnification factor is 5000.

## DETAILED DESCRIPTION

Specific implementations of the disclosure are described in detail below. It should be understood that, the specific implementations described herein are used to only describe and explain the disclosure, but are not used to limit the disclosure.

Endpoints of all ranges and all values disclosed herein are not limited to the precise ranges or values, and these ranges or values should be understood as including values close to these ranges or values. For value ranges, endpoint values of the ranges, an endpoint value of each range and an independent point value, and independent point values may be combined with each other to obtain one or more new value ranges, and these value ranges should be considered as being specifically disclosed herein.

A lithium-ion battery separator provided in the disclosure includes: a porous basement membrane, and a heat-resistant layer covering at least one side surface of the porous basement membrane, where the heat-resistant layer contains a high-temperature-resistant polymer and inorganic nanometer particles, and the heat-resistant layer has a fiber-network shaped structure.

According to the lithium-ion battery separator provided in the disclosure, If the content of an inorganic nanometer material in the heat-resistant layer is higher, corresponding high-temperature resistance performance is better. However, if the content of the inorganic nanometer material is higher, the morphology (strength and toughness) of a corresponding fiber-network shaped structure becomes poorer. The high-temperature resistance performance of the heat-resistant layer and the morphology of the fiber-network shaped structure are comprehensively considered. In some embodiments of the present disclosure, a weight ratio of the high-temperature-resistant polymer to an inorganic nanometer material is 100:(3 to 50); or a weight ratio of the high-temperature-resistant polymer to an inorganic nanometer material is 100:(5 to 18). In some embodiments of the present disclosure, the heat-resistant layer is formed by a high-temperature-resistant polymer and an inorganic nanometer material. In some embodiments of the present disclosure, based on 100% of the total weight of the heat-resistant layer, the content of the heat-resistant polymer is 85 to 95 wt%, and the content of the inorganic nanometer material is 5 to 15 wt%.

In the disclosure, the thickness and the fiber diameter of the heat-resistant layer are not particularly limited. In some embodiments of the present disclosure, the single-sided thickness of the heat-resistant layer is 0.5 $\mu$m to 30 $\mu$m. In some embodiments of the present disclosure, the average diameter of the fiber in the heat-resistant layer is 100 nm to 2000 nm. When the thickness of the heat-resistant fiber layer and the average diameter of the fiber in the heat-resistant fiber layer fall within the foregoing range, the positive and negative electrodes and the membrane may be effectively bonded, thereby improving the cycle performance of the battery.

According to the lithium-ion battery separator provided in the disclosure, In some embodiments of the present disclosure, the single-sided surface density of the heat-resistant layer is 0.2 g/m$^2$ to 15 g/m$^2$, for example, 1 g/m$^2$ to 5 g/m$^2$. The surface density is the mass of a substance applied onto a base material membrane in a unit area, and an applying amount on the base material membrane may be known according to the indicator. When the surface density of the heat-resistant layer falls within the foregoing optional range, the conductivity can be effectively ensured without affecting migration of lithium ions, and better bonding performance is provided, to facilitate improvement in the safety performance of the battery.

According to the lithium-ion battery separator provided in the disclosure, In some embodiments of the present disclosure, the porosity of the heat-resistant layer is above 80%, for example, 80% to 90% or 80% to 85%. When the porosity of the heat-resistant layer falls within the foregoing optional range, the ion conductivity of the lithium-ion battery separator can be effectively ensured. In the disclosure, a method for measuring the porosity of the heat-resistant layer includes: tailoring a heat-resistant layer sample of a particular volume, weighing, then immersing the heat-resistant layer sample in isobutanol, and measuring the weight of the sample after adsorption and balancing, where the porosity =

$$\frac{\text{Mass after adsorption} - \text{Mass before adsorption}}{\rho_{\text{isobutanol}}\text{Sample volume}} \times 100\%$$

.

According to an implementation of the disclosure, the heat-resistant layer is formed through electrostatic spinning by using a spinning solution containing a high-temperature-resistant polymer and inorganic nanometer particles.

In the disclosure, the type of the high-temperature-resistant polymer is not particularly limited, and the high-temperature-resistant polymer may be various existing polymers whose high-temperature resistance performance is relatively good. In some embodiments of the present disclosure, the melting point of the high-temperature-resistant polymer is not lower than 180°C, for example, 200°C to 600°C. An example of the high-temperature-resistant polymer includes but is not limited to: at least one of polyetherimide (PEI), polyimide (PI), poly(ether ether ketone) (PEEK), polyether sulfone (PES), polyamide-imide (PAI), polyamide acid (PAA), and polyvinylpyrrolidone (PVP). The poly(ether ether ketone) (PEEK) includes copoly(ether ether ketone) (CoPEEK) and modified (homopolymerized) poly(ether ether ketone).

According to the lithium-ion battery separator provided in the disclosure, in some embodiments of the present disclosure, the high-temperature-resistant polymer is selected from at least one of polyetherimide (PEI) and poly(ether ether ketone) (PEEK). When the high-temperature-resistant polymer and the inorganic particles are mixed to perform electrostatic spinning to obtain a fiber layer, the fiber formed by the high-temperature-resistant polymer can be better used as a backbone to support the strength of a membrane at a high temperature. Through cooperation with the inorganic particles, thermal shrinkage of the membrane at a high temperature can be further reduced and the heat-resistant performance of the composite membrane can be further enhanced, so that the prepared battery membrane has good heat-resistant performance and has good mechanical strength at a high temperature.

In the disclosure, the particle size and the type of the inorganic nanometer particle are not particularly limited. In some embodiments of the present disclosure, the average particle size of the inorganic nanometer particle is 50 nm to 3 $\mu$m, for example, 50 nm to 1 $\mu$m or 50 nm to 0.4 $\mu$m. An example of the inorganic nanometer particle includes but is not limited to: at least one of $Al_2O_3$, $SiO_2$, $BaSO_4$, $TiO_2$, CuO, MgO, $LiAlO_2$, $ZrO_2$, CNT, BN, SiC, $Si_3N_4$, WC, BC, A1N, $Fe_2O_3$, $BaTiO_3$, $MoS_2$, $\alpha$-$V_2O_5$, $PbTiO_3$, $TiB_2$, $CaSiO_3$, molecular sieve, clay, and kaolin.

In the disclosure, the thickness of the heat-resistant layer is not particularly limited, and in some embodiments of the present disclosure the single-sided thickness is 1 $\mu$m to 5 $\mu$m, for example, 1 $\mu$m to 3 $\mu$m.

The foregoing heat-resistant layer may be located on one side of the porous basement membrane, or the foregoing heat-resistant layer may be disposed on each of two sides of the porous basement membrane. In some embodiments of the present disclosure, the heat-resistant layer is disposed on each of two side surfaces of the porous basement membrane.

According to the lithium-ion battery separator of the disclosure, the porous basement membrane may be a polymer membrane, or may be a ceramic membrane. The ceramic membrane, similar to a regular ceramic membrane in the field, includes a polymer membrane and a ceramic layer located on a surface of the polymer membrane. An existing polyolefin membrane may be used as the foregoing polymer membrane. The polyolefin membrane is a general lithium-ion battery separator, including a polypropylene (PP) membrane, a polyethylene (PE) membrane, a PE/PP/PE three-layered membrane, and the like. In the disclosure, In some embodiments of the present disclosure, the porous basement membrane is a ceramic membrane, and the heat-resistant layer is located on a surface on a side of the ceramic membrane on which a ceramic layer is formed.

According to the disclosure, no special requirement is imposed on the ceramic layer in the ceramic membrane, and a regularly used ceramic layer in the field may be selected. However, to optimize the high-temperature and thermal-shrinkage resistance of the ceramic membrane, in some embodiments of the present disclosure the ceramic layer contains ceramic particles and a binder, and the surface density $\rho$ of the ceramic layer at a unit thickness (1 $\mu$m) satisfies 1.8 mg/cm$^2$<$\rho\leq$2.7 mg/cm$^2$, in some embodiments of the present disclosure, the surface density $\rho$ of the ceramic layer at a unit thickness (1 $\mu$m) satisfies 1.85 mg/cm$^2$$\leq\rho\leq$2.65 mg/cm$^2$, and in some embodiments of the present disclosure, the surface density $\rho$ of the ceramic layer at a unit thickness (1 $\mu$m) satisfies satisfies, for example, 1.9 mg/cm$^2$$\leq\rho\leq$2.6 mg/cm$^2$.

According to the foregoing ceramic membrane provided in the disclosure, by using the ceramic layer whose surface density at a unit thickness (1 $\mu$m) is controlled to be 1.8 mg/cm$^2$<$\rho\leq$2.7 mg/cm$^2$, the high-temperature resistance and thermal-shrinkage resistance performance of the ceramic membrane can be improved, so that the heat-resistant temperature of the ceramic membrane is above 160°C, and the thermal stability of the ceramic membrane is improved without increasing the thickness of the ceramic layer, so as not to affect the energy density of the battery.

According to the lithium-ion battery separator of the disclosure, in an implementation, in the ceramic layer, relative to the ceramic particles of 100 parts by weight, the content of the binder is 2 to 8 parts by weight, and in some embodiments of the present disclosure, in the ceramic layer, relative to the ceramic particles of 100 parts by weight, the content of the binder is 4 to 6 parts by weight. When the content of each substance in the ceramic layer is controlled to be within the foregoing range, the obtained ceramic membrane is enabled to have better high-temperature resistance and thermal-shrinkage resistance performance.

According to the lithium-ion battery separator of the disclosure, in a relatively specific implementation, in the ceramic layer, relative to the ceramic particles of 100 parts by weight, a binder of 2 to 8 parts by weight, a dispersant of 0.3 to 1 part by weight, a thickener of 0.5 to 1.8 parts by weight, and a surface treating agent of 0 to 1.5 parts by weight are further included, and the number-average molecular weight of the dispersant is below 50000; and in some embodiments of the present disclosure, in the ceramic layer, relative to the ceramic particles of 100 parts by weight, the content of the binder is 4 to 6 parts by weight, the content of the dispersant is 0.4 to 0.8 part by weight, the content of the thickener is 0.7 to 1.5 parts by weight, and the content of the surface treating agent is 0.5 to 1.2 parts by weight.

According to the lithium-ion battery separator of the disclosure, the ceramic particle in the ceramic layer may include but is not limited to at least one of $Al_2O_3$ (which includes types $\alpha$, $\beta$, and $\gamma$), $SiO_2$, $BaSO_4$, BaO, titanium dioxide ($TiO_2$, rutile, or anatase), CuO, MgO, $Mg(OH)_2$, $LiAlO_2$, $ZrO_2$, carbon nanotube (CNT), BN, SiC, $Si_3N_4$, WC, BC, AlN, $Fe_2O_3$, $BaTiO_3$, $MoS_2$, $\alpha$-$V_2O_5$, $PbTiO_3$, $TiB_2$, $CaSiO_3$, molecular sieve (ZSM-5), clay, boehmite, and kaolin, and in some embodiments of the present disclosure, the ceramic particle in the ceramic layer is selected from at least one of $Al_2O_3$,

$SiO_2$, and $BaSO_4$.

When the inorganic particle is $Al_2O_3$ (particularly $\alpha$-$Al_2O_3$), $SiO_2$, or $BaSO_4$, excellent thermal insulation performance and electrochemical stability are provided, to be more favorable to improvement in the thermal stability of the lithium-ion battery separator, thereby improving the safety performance of the battery.

The inventor of the disclosure finds through a large quantity of experiments that, the compatibility between the heat-resistant layer provided in the disclosure and the foregoing ceramic membrane is better than the compatibility between the heat-resistant layer and the polymer membrane; and the surface of the ceramic layer in the ceramic membrane is uneven, and has a large quantity of particle bumps that may provide more attachment points to the heat-resistant layer, facilitating improvement in the bonding strength of the heat-resistant layer on an inorganic particle layer. The heat-resistant layer may better bond the positive and negative electrodes and the membrane into an entirety. Moreover, the size stability and the thermal shrinkage resistance performance of the ceramic membrane are better. If the foregoing heat-resistant layer has excellent adhesiveness, cooperation with the foregoing inorganic particle layer may improve the hardness of the prepared lithium-ion battery. Moreover, during cycling, an electrode plate is not deformed easily, and the safety is high.

According to the lithium-ion battery separator of the disclosure, in an implementation, the particle size of the inorganic particle in the ceramic layer is 200 nm to 800 nm, and in some embodiments of the present disclosure , the particle size of the inorganic particle in the ceramic layer is 300 nm to 600 nm. The inventor of the disclosure finds that, when the particle size of the inorganic particle in the inorganic particle layer falls within the foregoing range, not only a slurry used for forming the ceramic layer may be effectively prevented from being coagulated, but also it is favorable to improvement in the air permeability of the ceramic membrane.

According to the lithium-ion battery separator of the disclosure, for selection of the binder in the ceramic layer, refer to regular selection in the field. For example, the binder may be at least one of polyacrylate, a copolymer of polyvinylidene fluoride and hexafluoropropylene, a copolymer of polyvinylidene fluoride and trichloro ethylene, polyacrylonitrile, polyvinyl pyrrolidone, polyimide, polyvinyl alcohol, and the like, and in some embodiments of the present disclosure, the binder is polyacrylate, for example, polyacrylate whose glass transition temperature satisfies -40°C to 0°C. The polyacrylate whose glass transition temperature satisfies -40°C to 0°C may be specifically at least one of a homopolymer, a copolymer, and the like of methylmethacylate, ethylmethacrylate, butylmethacrylate, and hexylmethacrylate. When the polyacrylate whose glass transition temperature satisfies -40°C to 0°C is used as the binder, the manufacturing performance of the ceramic membrane can be improved without affecting the bonding strength of the ceramic membrane, to have a better industrial application prospect.

Moreover, in some embodiments of the present disclosure, a crosslinked monomer such as methyl methacrylate and/or methylolacrylamide is introduced into the foregoing polyacrylate binder, and in some embodiments of the present disclosure , the content of the crosslinked monomer is controlled to be within 8 wt% of the weight of the binder, and in some embodiments of the present disclosure, the content of the crosslinked monomer is controlled to be 3 wt% to 5 wt%. In this way, the polyacrylate binder may be mildly crosslinked, thereby improving the water resistance of the ceramic membrane and increasing the bonding strength of the ceramic layer.

In the disclosure, the type of the dispersant in the ceramic layer is not particularly limited, and the dispersant may be various existing substances that are helpful to dispersion of each substance in the ceramic layer slurry and whose number-average molecular weight is below 50000, or 5000 to 20000. In some embodiments of the present disclosure, the dispersant in the ceramic layer is at least one of polyacrylate, polyglycol ether, a silicate compound, a phosphate compound, and guar gum, and in some embodiments of the present disclosure, the dispersant in the ceramic layer is at least one of polyacrylate, polyglycol ether, and a phosphate compound. The polyacrylatemay be, for example, at least one of potassium polyacrylate, sodium polyacrylate, lithium polyacrylate, and the like. The polyglycol ether may be, for example, polyethylene glycol tert-octylphenyl ether and/or polyethylene glycol monooleyl ether. The phosphate compound may be, for example, sodium tripolyphosphate and/or sodium hexametaphosphate.

In the disclosure, the type of the thickener in the ceramic layer is not particularly limited, and in some embodiments of the present disclosure, the thickener is at least one of polyacrylate, polyvinylpyrrolidone, a cellulose compound, and polyacrylamide, and in some embodiments of the present disclosure, the thickener is at least one of polyacrylate, an acrylic acid copolymer, and a cellulose compound. The polyacrylatemay be, for example, at least one of potassium polyacrylate, sodium polyacrylate, lithium polyacrylate, and the like. The acrylic acid copolymer is a copolymer of acrylic acid and another monomer, and may be, for example, at least one of a copolymer of acrylic acid and styrene, a copolymer of acrylic acid and ethyl acrylate, a copolymer of acrylic acid and ethylene, and the like. The cellulose compound may be, for example, at least one of sodium carboxymethylcellulose, potassium carboxymethylcellulose, hydroxyethyl cellulose, and the like. Moreover, the viscosity of the thickener in an aqueous solution of 1 wt% is 1500 mPa·s to 7000 mPa·s. In this way, the thickener not only can be quite well dispersed in the ceramic layer slurry, but also can be favorable to applying, and more favorable to improvement in the surface density. Moreover, each of the dispersant and the thickener may be polyacrylate, but, the number-average molecular weight of polyacrylate used as the thickener is far greater than the molecular weight of polyacrylate used as the dispersant, the number-average molecular weight of the polyacrylate used as the thickener is usually 300000 to 1500000, and the number-average molecular weight of the polyacrylate used as the dispersant is below 50000.

In the disclosure, the type of the surface treating agent is not particularly limited, and the surface treating agent is 3-glycidyloxypropyltrimethoxysilane and/or 3-glycidyloxypropyltriethoxysilane. In this way, interaction between the ceramic particles and the binder can be further improved, to enhance the strength of the ceramic membrane.

According to the lithium-ion battery separator of the disclosure, in an implementation, the thickness of the polymer membrane in the ceramic membrane is 5 μm to 30 μm, for example, 6 μm to 25 μm. Moreover, the single-sided thickness of the ceramic layer is 1 μm to 5 μm, for example, 2 μm to 3.5 μm, so as to be more favorable to improvement in the high-temperature resistance and thermal-shrinkage resistance performance of the ceramic membrane and improvement in the air permeability.

According to the lithium-ion battery separator of the disclosure, in an implementation, the lithium-ion battery separator further includes a bonding layer, and the bonding layer is formed on an outermost side of at least one side surface of the lithium-ion battery separator. The formation of the bonding layer can improve the viscosity between the lithium-ion battery separator and the positive and negative electrodes, increase the disposition stability of the lithium-ion battery separator, improve the safety performance of the battery, and further improve the ion conductivity of the lithium-ion battery separator. In the disclosure, , the bonding layer contains an acrylate crosslinked polymer and a styrene-acrylate crosslinked copolymer and/or a vinylidene fluoride-hexafluoropropylene copolymer, and the porosity of the bonding layer is 40% to 65%. When the ceramic membrane further includes the foregoing particular bonding layer, the ceramic membrane not only has good high-temperature resistance and thermal-shrinkage resistance performance, but also has higher bonding strength and ion conductivity.

That "the bonding layer contains an acrylate crosslinked polymer and a styrene-acrylate crosslinked copolymer and/or a vinylidene fluoride-hexafluoropropylene copolymer" means that the bonding layer contains an acrylate crosslinked polymer and a styrene-acrylate crosslinked copolymer and does not contain a vinylidene fluoride-hexafluoropropylene copolymer, or contains an acrylate crosslinked polymer and a vinylidene fluoride-hexafluoropropylene copolymer and does not contain a styrene-acrylate crosslinked copolymer, or contains an acrylate crosslinked polymer, a styrene-acrylate crosslinked copolymer, and a vinylidene fluoride-hexafluoropropylene copolymer. Moreover, "containing a self-crosslinking pure acrylic emulsion and a self-crosslinking styrene acrylic emulsion and/or a copolymer emulsion of vinylidene fluoride and hexafluoropropylene" may also be similarly explained.

The acrylate crosslinked polymer is a polymer obtained by performing cross-linking polymerization on reaction-type acrylate monomers. The crosslinking degree of the acrylate crosslinked polymer may be 2% to 30%, in some embodiments of the present disclosure, the crosslinking degree of the acrylate crosslinked polymer is 5% to 20%. In the disclosure, the crosslinking degree is the percentage of the weight of the crosslinked polymer to the total weight of the polymer. Moreover, the glass transition temperature of the acrylate crosslinked polymer is -20°C to 60°C, for example, 12°C to 54°C. According to an implementation of the disclosure, the acrylate crosslinked polymer is a second acrylate crosslinked polymer, a third acrylate crosslinked polymer, or a mixture of a first acrylate crosslinked polymer and the second acrylate crosslinked polymer and/or the third acrylate crosslinked polymer, where the first acrylate crosslinked polymer contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, the second acrylate crosslinked polymer contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and the third acrylate crosslinked polymer contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; the glass transition temperature of the first acrylate crosslinked polymer is 50°C to 60°C, the glass transition temperature of the second acrylate crosslinked polymer is -20°C to -5°C, and the glass transition temperature of the third acrylate crosslinked polymer is 30°C to 50°C.

The styrene-acrylate crosslinked copolymer is a copolymer obtained by copolymerizing a styrene monomer and a reaction-type acrylate monomer. A weight ratio of a styrene structure unit to an acrylate structure unit in the styrene-acrylate crosslinked copolymer may be (0.5 to 2):1, in some embodiments of the present disclosure, a weight ratio of a styrene structure unit to an acrylate structure unit in the styrene-acrylate crosslinked copolymer is (0.67 to 1.5):1. The crosslinking degree of the styrene-acrylate crosslinked copolymer may be 2% to 30%, and in some embodiments of the present disclosure, the crosslinking degree of the styrene-acrylate crosslinked copolymer is 5% to 20%. Moreover, the glass transition temperature of the styrene-acrylate crosslinked copolymer is -30°C to 50°C, for example, -20°C to 50°C. According to an implementation of the disclosure, the styrene-acrylate crosslinked copolymer contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; and the glass transition temperature of the styrene-acrylate crosslinked copolymer is 15°C to 30°C.

The glass transition temperature of the vinylidene fluoride-hexafluoropropylene copolymer is -65°C to -40°C, for example, -60°C to -40°C. According to an implementation of the disclosure, the vinylidene fluoride-hexafluoropropylene copolymer contains a polyvinylidene fluoride chain segment of 80 to 98 wt% and a polyhexafluoropropylene chain segment of 2 to 20 wt%, and contains a polyvinylidene fluoride chain segment of 90 to 96 wt% and a polyhexafluoropropylene chain segment of 4 to 10 wt%; and the glass transition temperature of the vinylidene fluoride-hexafluoropropylene copolymer is -60°C to -40°C.

According to an implementation of the disclosure, the bonding layer contains the acrylate crosslinked polymer and the styrene-acrylate crosslinked copolymer and does not contain the vinylidene fluoride-hexafluoropropylene copolymer, and a weight ratio of the acrylate crosslinked polymer to the styrene-acrylate crosslinked copolymer is 1:(0.05 to 2), and in some embodiments of the present disclosure, a weight ratio of the acrylate crosslinked polymer to the styrene-acrylate crosslinked copolymer is 1:(1 to 2); or the bonding layer contains the acrylate crosslinked polymer and the vinylidene fluoride-hexafluoropropylene copolymer and does not contain the styrene-acrylate crosslinked copolymer, and a weight ratio of the acrylate crosslinked polymer to the vinylidene fluoride-hexafluoropropylene copolymer is 1:(0.3 to 25), and in some embodiments of the present disclosure, a weight ratio of the acrylate crosslinked polymer to the vinylidene fluoride-hexafluoropropylene copolymer is 1 :(0.4 to 19); or the bonding layer contains the acrylate crosslinked polymer, the styrene-acrylate crosslinked copolymer, and the vinylidene fluoride-hexafluoropropylene copolymer, and a weight ratio of the acrylate crosslinked polymer to the styrene-acrylate crosslinked copolymer to the vinylidene fluoride-hexafluoropropylene copolymer is 1:(0.01 to 2):(0.3 to 5), and in some embodiments of the present disclosure, a weight ratio of the acrylate crosslinked polymer to the styrene-acrylate crosslinked copolymer to the vinylidene fluoride-hexafluoropropylene copolymer is 1:(0.05 to 1.5):(0.45 to 3). The inventor of the disclosure finds through in-depth research that, when the foregoing several polymers are cooperatively used according to the foregoing particular proportion, it is quite favorable to improvement in the liquid absorption rate and the conductivity of the battery membrane and improvement in the manufacturing performance.

According to an implementation of the disclosure, the bonding layer contains a first acrylate crosslinked polymer, a second acrylate crosslinked polymer, and the styrene-acrylate crosslinked copolymer and does not contain the vinylidene fluoride-hexafluoropropylene copolymer, and a weight ratio of the first acrylate crosslinked polymer to the second acrylate crosslinked polymer to the styrene-acrylate crosslinked copolymer is (5 to 10):1:(10 to 13); or

the bonding layer contains the first acrylate crosslinked polymer, the second acrylate crosslinked polymer, and the vinylidene fluoride-hexafluoropropylene copolymer and does not contain the styrene-acrylate crosslinked copolymer, and a weight ratio of the first acrylate crosslinked polymer to the second acrylate crosslinked polymer to the vinylidene fluoride-hexafluoropropylene copolymer is (5 to 15):1:(5 to 12); or

the bonding layer contains the second acrylate crosslinked polymer and the vinylidene fluoride-hexafluoropropylene copolymer and does not contain the styrene-acrylate crosslinked copolymer, and a weight ratio of the second acrylate crosslinked polymer to the vinylidene fluoride-hexafluoropropylene copolymer is 1:(5 to 20); or

the bonding layer contains the second acrylate crosslinked polymer, the styrene-acrylate crosslinked copolymer, and the vinylidene fluoride-hexafluoropropylene copolymer, and a weight ratio of the second acrylate crosslinked polymer to the styrene-acrylate crosslinked copolymer to the vinylidene fluoride-hexafluoropropylene copolymer is 1:(0.5 to 2):(1 to 5); or

the bonding layer contains the third acrylate crosslinked polymer, the styrene-acrylate crosslinked copolymer, and the vinylidene fluoride-hexafluoropropylene copolymer, and a weight ratio of the third acrylate crosslinked polymer to the styrene-acrylate crosslinked copolymer to the vinylidene fluoride-hexafluoropropylene copolymer is 1:(0.5 to 2):(1 to 5); or the bonding layer contains the first acrylate crosslinked polymer, the second acrylate crosslinked polymer, the styrene-acrylate crosslinked copolymer, and the vinylidene fluoride-hexafluoropropylene copolymer, and a weight ratio of the first acrylate crosslinked polymer to the second acrylate crosslinked polymer to the styrene-acrylate crosslinked copolymer to the vinylidene fluoride-hexafluoropropylene copolymer is (10 to 15):1:(0.5 to 2):(5 to 10), where

the first acrylate crosslinked polymer contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, the second acrylate crosslinked polymer contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and the third acrylate crosslinked polymer contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; the styrene-acrylate crosslinked copolymer contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; the vinylidene fluoride-hexafluoropropylene copolymer contains a polyvinylidene fluoride chain segment of 80 to 98 wt% and a polyhexafluoropropylene chain segment of 2 to 20 wt%; and the glass transition temperature of the first acrylate crosslinked polymer is 50°C to 60°C, the glass transition temperature of the second acrylate crosslinked polymer is -20°C to -5°C, the glass transition temperature of the third acrylate crosslinked polymer is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

According to the disclosure, in some embodiments of the present disclosure, the bonding layer further contains at least one of an acrylonitrile-acrylate copolymer, a vinyl chloride-propylene copolymer, and a butadiene-styrene copolymer. When the bonding layer further contains an acrylonitrile-acrylate copolymer, it is favorable to improvement in the ion conductivity of the battery membrane inside the battery; and when the bonding layer further contains a vinyl chloride-propylene copolymer and/or a butadiene-styrene copolymer, it is favorable to reduction in the liquid absorption rate of the battery membrane, so that the liquid absorption rate cannot go so far as to be excessively high. If the liquid absorption rate is excessively high, the positive electrode and the negative electrode inside the battery are lack of an electrolyte and consequently the performance of the battery deteriorates.

When the bonding layer further contains the acrylonitrile-acrylate copolymer, a weight ratio of the acrylonitrile-acrylate copolymer to the acrylate crosslinked polymer is (0.05 to 2):1, for example, (0.08 to 1.85):1. When the bonding layer further contains the vinyl chloride-propylene copolymer, a weight ratio of the vinyl chloride-propylene copolymer to the acrylate crosslinked polymer is (0.15 to 7):1, for example, (0.2 to 6):1. When the bonding layer further contains the butadiene-styrene copolymer, a weight ratio of the butadiene-styrene copolymer to the acrylate crosslinked polymer is (0.05 to 2):1, for example, (0.08 to 1.85):1.

Moreover, the single-sided surface density of the bonding layer is 0.05 $mg/cm^2$ to 0.9 $mg/cm^2$, for example, 0.1 $mg/cm^2$ to 0.6 $mg/cm^2$. The single-sided thickness of the bonding layer is 0.1 $\mu$m to 1 $\mu$m, for example, 0.2 $\mu$m to 0.6 $\mu$m.

A method for preparing a lithium-ion battery separator provided in the disclosure includes the following steps:

S1: providing a porous basement membrane; and
S2: preparing a spinning solution containing a high-temperature-resistant polymer and inorganic nanometer particles, and forming a heat-resistant layer on at least one side surface of the porous basement membrane through an electrostatic spinning method by using the spinning solution, where in some embodiments of the present disclosure, in the spinning solution, a weight ratio of the high-temperature-resistant polymer to an inorganic nanometer material is 100:(3 to 50), for example, 100:(5 to 18).

According to the method for preparing a lithium-ion battery separator provided in the disclosure, a solvent in the spinning solution is used to dissolve the high-temperature-resistant polymer and disperse the inorganic nanometer particles, so as to smoothly implement a subsequent electrostatic spinning process. The solvent may be various existing inert liquid substances that can achieve the foregoing objective, and a specific example of the solvent includes but is not limited to: at least one of N-methypyrrolidone (NMP), N'N-dimethylformamide (DMF), N'N-dimethylacetamide (DMAC), toluene, acetone, tetrahydrofuran, and the like. Moreover, the use amount of the solvent may be selected to enable the concentration of the high-temperature-resistant polymer in the obtained spinning solution is 5 to 30 wt%, or 8 to 25 wt%. When the relative molecular mass of the spinning polymer (the high-temperature-resistant polymer) is fixed, if other conditions are determined, the concentration of the spinning solution is a decisive factor of affecting intertwining of a molecular chain in the solution. Polymer solutions may be divided into a polymer dilute solution, a semi-dilute solution, and a concentrated solution according to different concentrations and molecular chain morphologies. In the dilute solution, molecular chains are separated from each other and distributed evenly, and as the concentration of the solution is increased, molecular chains are intermixed and overlapped with each other, and are intertwined. A dividing concentration between the dilute solution and the semi-dilute solution is referred to as a contact concentration, and is a concentration in which molecular chains are in contact with each other and are subsequently overlapped as the concentration of the solution is increased. A dividing concentration between the semi-dilute solution and the concentrated solution is referred to as an intertwining concentration, and is a concentration in which molecular chains are intermixed with each other and intertwined with each other as the concentration of the solution is further increased. In the disclosure, when the concentration of the spinning solution falls within the foregoing optional range, the filamentation performance may be effectively ensured. Moreover, as the concentration of the spinning solution is increased, the polymer intertwining degree is increased, and the filamentation performance is better.

The type of the high-temperature-resistant polymer and the type of the inorganic nanometer particle are described above, and details are not described herein.

The basic principle of the electrostatic spinning is well known by a person skilled in the art, and is specifically: applying a voltage between an ejection device and an acceptance device, forming a jet stream from a spinning solution originating from a pyramidal end portion of the ejection device, stretching the jet stream in an electric field, and finally forming fiber on the acceptance device. The acceptance device includes a roller (rotatable) or a receiving plate. The electrostatic spinning method usually includes a needle spinning method and a needleless spinning method, and each specific process is well known by a person skilled in the art. Details are not described herein.

When the electrostatic spinning method is the needle spinning method, the stream velocity of the spinning solution is 0.3 mL/h to 5 mL/h, for example, 0.6 mL/h to 2 mL/h; the spinning temperature is 25°C to 70°C, for example, 30°C to 50°C; the spinning humidity is 2% to 60%, for example, 2% to 50%; and the spinning voltage is 5 kV to 25 kV, for example, 8 kV to 20 kV. When the stream velocity falls within the foregoing optional range, it may be ensured that an appropriate fiber diameter is obtained, and the needle may be effectively prevented from being jammed, to ensure smooth spinning. Particularly, on the premise that the mixed solvent provided in the disclosure is used, if the stream velocity is controlled to fall within the foregoing range, a fiber layer having excellent porosity and bonding performance may be obtained. When the spinning temperature and the spinning humidity fall within the foregoing range, in cooperation with the foregoing mixed solvent, it is ensured that fiber obtained through spinning is smoothly filamented and then dried, to prevent the fiber from being subject to adhesion which causes decrease in the porosity, and the bonding performance of the fiber layer may be prevented from being decreased. When the voltage falls within the foregoing range, the spinning solution may be effectively motivated to form a jet stream, thereby generating an effective stretching effect in the electric field, obtaining fiber whose diameter is appropriate, ensuring the morphology of the formed fiber, and facilitating improvement in the porosity and the bonding performance of the fiber layer. Moreover, the receiving device is a roller, and the rotational speed of the roller is 100 rpm to 6000 rpm, for example, 1000 rpm to 2000 rpm. When the linear velocity of a surface of a collection device used to collect fiber is excessively small, because a jet stream in rapid movement is in a disordered state, fiber formed in this case is distributed on the surface of the collection device in an irregular accumulation state, and the mechanical strength of the obtained fiber layer is relatively poor. When the linear velocity of the surface of the collection device reaches a particular level, the formed fiber is tightly attached onto the surface of the collection device in a circular manner, and the fiber is deposited in a same direction, and is basically in a straight state, that is, fiber bundles that are straight and extend in a same direction are generated. On the other hand, when the linear velocity of the surface of the collection device is excessively large, because an excessively rapid receiving speed damages the jet stream of the fiber, continuous fiber cannot be obtained. Through continuous experiments on a regular electrostatic spinning process, the inventor finds that, only when the rotational speed of the collection device is 100 rpm to 6000 rpm, fiber bundles that are straight and extend in a same direction may be obtained. In an implementation, when the rotational speed of the collection device is 1000 rpm to 2000 rpm, in the obtained fiber layer, the morphology of the fiber is better, to be more favorable to improvement in the mechanical strength of the fiber layer.

When the electrostatic spinning method is the needleless spinning method, spinning conditions includes: the temperature is 25°C to 70°C, the humidity is 2% to 60%, the movement speed of a liquid pool is 0 mm/sec to 2000 mm/sec, the movement speed of a base material is 0 mm/min to 20000 mm/min (in this case, the collection device is plate-shaped, and does not rotate) or the rotational speed of a roller is 100 rpm to 6000 rpm (in this case, the collection device is the roller), the voltage of a positive electrode (the voltage of a source end for generating fiber) is 0 kV to 150 kV, the voltage of a negative electrode (the voltage of the collection device) is -50 kV to 0 kV, and a voltage difference (a difference between the voltage of the source end and that of the collection device) is 10 kV to 100 kV; and in some embodiments of the present disclosure includes: the temperature is 30°C to 50°C, the humidity is 2% to 50%, the movement speed of a liquid pool is 100 mm/sec to 400 mm/sec, the movement speed of a base material is 1000 mm/min to 15000 mm/min or the rotational speed of a roller is 1000 rpm to 2000 rpm, the voltage of a positive electrode is 10 kV to 40 kV, the voltage of a negative electrode is -30 kV to 0 kV, and a voltage difference is 20 kV to 60 kV.

The inventor of the disclosure finds through a large quantity of experiments that, on the premise that the concentration of the high-temperature-resistant polymer in the spinning solution falls within the foregoing optional range, by using the electrostatic spinning process under the foregoing conditions, the volatilization speed of the solvent may well match the fiber forming speed, a fiber layer whose appearance is good and adhesiveness is higher and in which the adhesiveness between filaments in the heat-resistant layer is better may be obtained, and the porosity of the heat-resistant fiber layer may be above 80%, and in some embodiments of the present disclosure, the porosity of the heat-resistant fiber layer is 80% to 90%, for example, 80% to 85%.

In the disclosure, the diameter of the fiber in and the thickness of the heat-resistant layer are not particularly limited, and may be specifically altered by controlling a specific process condition. In some embodiments of the present disclosure, the average diameter of the fiber is 100 nm to 2000 nm, and the single-sided thickness of the heat-resistant layer is 0.5 $\mu$m to 30 $\mu$m. In some embodiments of the present disclosure, the single-sided surface density of the fiber layer prepared by using the foregoing method is 0.2 g/m$^2$ to 15 g/m$^2$.

According to the method for preparing a lithium-ion battery separator provided in the disclosure, the foregoing electrostatic spinning may be performed on one side of the porous basement membrane, or may be performed on two sides of the porous basement membrane. In an implementation, in step S2, through electrostatic spinning, the heat-resistant layer is formed on each of two side surfaces of the porous basement membrane. In this case, electrostatic spinning is first performed on a side of the porous basement membrane, thermal rolling and drying are selectively performed, then electrostatic spinning is performed on another side of the porous basement membrane, and thermal rolling and drying are selectively performed.

According to the disclosure, after electrostatic spinning ends, the membrane is taken down, and membrane lamination processing may be selectively performed at 50°C to 120°C and under 0.5 Mpa to 15 Mpa, for example, thermal rolling is performed (thermal rolling conditions are: the temperature is 50°C to 60°C, and the pressure is 1 MPa to 15 MPa), and then air blowing and drying are performed for 24h at 50°C.

According to the method for preparing a lithium-ion battery separator provided in the disclosure, in some embodiments of the present disclosure, the porous basement membrane is a ceramic membrane, and the ceramic membrane includes a polymer membrane and a ceramic layer that is located on a surface of the polymer membrane; and the heat-resistant layer is formed on a surface of the ceramic layer of the ceramic membrane. According to the disclosure, a characteristic in which the ceramic layer of the ceramic membrane contains an inorganic particle layer is used, so that the heat-resistant layer may be more firmly bonded onto a surface of the ceramic layer. On one hand, the peeling strength of the prepared lithium-ion battery separator may be effectively improved, and on the other hand, the inorganic particle layer is located between the polymer membrane and the heat-resistant layer, and the entire lithium-ion battery separator may be endowed with excellent thermal shrinkage resistance performance.

According to the preparation method of the disclosure, a method for preparing the ceramic membrane in step S1 includes: S11: providing a polymer membrane; and S12: stirring and mixing ceramic particles, a binder, a dispersant, and a thickener according to a weight ratio of 100:(2 to 8):(0.3 to 1):(0.5 to 1.8) to obtain a ceramic layer slurry, applying the ceramic layer slurry onto at least one side surface of the polymer membrane, and performing drying to obtain the ceramic layer, where the number-average molecular weight of the dispersant is below 50000.

According to the preparation method of the disclosure, the dispersity of each raw material in the ceramic layer slurry and the stability of the ceramic layer slurry are comprehensively considered. In some embodiments of the present disclosure, in step S12, a rotational speed of the stirring is 3000 rpm to 10000 rpm, and in some embodiments of the present disclosure , a rotational speed of the stirring is 3000 rpm to 9000 rpm. When substances for forming the ceramic layer slurry are mixed at the foregoing optional rotational speed, it is more favorable to improvement in the surface density of the ceramic layer.

According to the preparation method of the disclosure, in some embodiments of the present disclosure, the ceramic particles, the binder, the dispersant, and the thickener are mixed according to the foregoing weight ratio, and when the use amount of the dispersant is less than 0.3 part by weight and/or the use amount of the thickener is less than 0.5 part by weight (relative to 100 parts by weight of the ceramic particles, the same below), the dispersity of the ceramic layer slurry may be insufficient, and it is difficult to form highly dense accumulation so as to obtain the surface density of $1.8$ mg/cm$^2$ $<\rho\leq 2.7$ mg/cm$^2$ of the disclosure; and when the use amount of the dispersant is greater than 1 part by weight and/or the use amount of the thickener is greater than 1.8 parts by weight, the air permeability of the lithium-ion battery separator may be affected and consequently the output characteristic of the battery is affected. When the use amount of the binder is less than 2 parts by weight, the bonding strength may be insufficient; and when the use amount of the binder is greater than 8 parts by weight, the air permeability of the lithium-ion battery separator may be severely affected. When the number-average molecular weight of the dispersant is higher than 50000, the dispersion effect of the ceramic layer slurry may be affected, and the surface density may be reduced.

According to the preparation method provided in the disclosure, in some embodiments of the present disclosure, in step S12, the ceramic particles, the binder, the dispersant, and the thickener are stirred and mixed according to a weight ratio of 100:(4 to 6):(0.4 to 0.8):(0.7 to 1.5). When the use amount of each substance in the ceramic layer slurry is controlled to be within the foregoing optional range, the obtained ceramic layer is enabled to have higher surface density and better high-temperature resistance and thermal-shrinkage resistance performance.

Moreover, the types and properties of the ceramic particles, the binder, the dispersant, and the thickener are described above, and details are not described herein.

According to an implementation of the disclosure, the ceramic layer slurry further contains a surface treating agent, and the surface treating agent is 3-glycidyloxypropyltrimethoxysilane and/or 3-glycidyloxypropyltriethoxysilane. In this way, interaction between the ceramic particles and the binder can be further improved, to enhance the strength of the ceramic layer. Moreover, relative to the ceramic particles of 100 parts by weight, in some embodiments of the present disclosure, a use amount of the surface treating agent is below 1.5 parts by weight, and in some embodiments of the present disclosure, a use amount of the surface treating agent is 0.5 to 1.2 parts by weight. In this way, it is more favorable to improvement in the air permeability of the ceramic layer.

According to the preparation method of the disclosure, in an implementation, the ceramic layer slurry obtained through mixing in step S12 may further contain surfactants such as sodium dodecylbenzenesulfonate, and use amounts of these surfactants may be regularly selected in the field. This can be known by each person skilled in the art, and details are not described herein.

According to a specific implementation of the disclosure, step S12 includes: stirring the ceramic particles, the dispersant, and the thickener at a rotational speed of 3000 rpm to 10000 rpm for 0.5 to 3 hours, then adding the surface treating agent and continuing to stir for 0.5 to 3 hours, then adding the binder and stirring for 0.5 to 2 hours at a rotational speed of 3000 rpm to 4000 rpm, then applying the obtained ceramic layer slurry onto at least one side surface of the polymer membrane, and then performing drying to form the ceramic layer on the at least one side surface of the polymer membrane, where the ceramic particles, the binder, the dispersant, and the thickener are fed according to a weight ratio of 100:(2 to 8):(0.3 to 1):(0.5 to 1.8), and the number-average molecular weight of the dispersant is below 50000. The temperature of the drying is 50°C to 80°C. In some embodiments of the present disclosure, in step S12, the ceramic layer is formed on each of two surfaces of the polymer membrane.

According to the preparation method of the disclosure, in some embodiments of the present disclosure, it use amount of the ceramic layer slurry may be selected to enable the single-sided thickness of the obtained ceramic layer to be 1 μm to 5 μm, or to be 2 μm to 3.5 μm, so as to be more favorable to improvement in the high-temperature resistance and thermal-shrinkage resistance performance of the ceramic layer and improvement in the air permeability.

According to the preparation method of the disclosure, the method further includes step S3: forming a bonding layer on at least one side surface of a composite membrane obtained in step S2. For a method for forming the bonding layer, refer to a regular technical means in the field.

According to an implementation of the disclosure, step S3 includes: attaching a bonding layer slurry containing a self-crosslinking pure acrylic emulsion and a self-crosslinking styrene acrylic emulsion and/or a copolymer emulsion of vinylidene fluoride and hexafluoropropylene onto at least one side surface of the composite membrane obtained in step S2, and performing drying, to form the bonding layer whose porosity is 40% to 65%. In this case, the lithium-ion battery separator not only has good high-temperature resistance and thermal-shrinkage resistance performance, but also has higher ion conductivity and bonding strength, to have a better industrial application prospect.

The self-crosslinking pure acrylic emulsion is an emulsion obtained by performing emulsion polymerization on reaction-type acrylate monomers. The crosslinking degree of the acrylate crosslinked polymer in the self-crosslinking pure acrylic emulsion may be 2% to 30%, or is 5% to 20%. Moreover, the glass transition temperature of the acrylate crosslinked polymer in the self-crosslinking pure acrylic emulsion is -20°C to 60°C, and in some embodiments of the present disclosure, the glass transition temperature of the acrylate crosslinked polymer in the self-crosslinking pure acrylic emulsion is 12°C to 54°C. According to an implementation of the disclosure, the self-crosslinking pure acrylic emulsion is a second self-crosslinking pure acrylic emulsion, a third self-crosslinking pure acrylic emulsion, or a mixture of a first self-crosslinking pure acrylic emulsion and the second self-crosslinking pure acrylic emulsion and/or the third self-crosslinking pure acrylic emulsion; an acrylate crosslinked polymer in the first self-crosslinking pure acrylic emulsion contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, an acrylate crosslinked polymer in the second self-crosslinking pure acrylic emulsion contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and an acrylate crosslinked polymer in the third self-crosslinking pure acrylic emulsion contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; and the glass transition temperature of the acrylate crosslinked polymer in the first self-crosslinking pure acrylic emulsion is 50°C to 60°C, the glass transition temperature of the acrylate crosslinked polymer in the second self-crosslinking pure acrylic emulsion is -20°C to -5°C, and the glass transition temperature of the acrylate crosslinked polymer in the third self-crosslinking pure acrylic emulsion is 30°C to 50°C.

The self-crosslinking styrene acrylic emulsion is a copolymer emulsion obtained by copolymerizing a styrene monomer and a reaction-type acrylate monomer. A weight ratio of a styrene structure unit to an acrylate structure unit in the styrene-acrylate crosslinked copolymer may be (0.5 to 2):1, and in some embodiments of the present disclosure, a weight ratio of a styrene structure unit to an acrylate structure unit in the styrene-acrylate crosslinked copolymer is (0.67 to 1.5):1. The crosslinking degree of the styrene-acrylate crosslinked copolymer in the self-crosslinking styrene acrylic emulsion may be 2% to 30%, and in some embodiments of the present disclosure the crosslinking degree of the styrene-acrylate crosslinked copolymer in the self-crosslinking styrene acrylic emulsion is 5% to 20%. Moreover, the glass transition temperature of the styrene-acrylate crosslinked copolymer in the self-crosslinking styrene acrylic emulsion is -30°C to 50°C, and in some embodiments of the present disclosure, the glass transition temperature of the styrene-acrylate crosslinked copolymer in the self-crosslinking styrene acrylic emulsion is -20°C to 50°C. According to an implementation of the disclosure, the styrene-acrylate crosslinked copolymer in the self-crosslinking styrene acrylic emulsion contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; and the glass transition temperature of the styrene-acrylate crosslinked copolymer is 15°C to 30°C.

The glass transition temperature of the vinylidene fluoride-hexafluoropropylene copolymer in the copolymer emulsion of vinylidene fluoride and hexafluoropropylene is -65°C to -40°C, and in some embodiments of the present disclosure, the glass transition temperature of the vinylidene fluoride-hexafluoropropylene copolymer in the copolymer emulsion of vinylidene fluoride and hexafluoropropylene is -60°C to -40°C. According to an implementation of the disclosure, the vinylidene fluoride-hexafluoropropylene copolymer in the copolymer emulsion of vinylidene fluoride and hexafluoropropylene contains a polyvinylidene fluoride chain segment of 80 to 98 wt% and a polyhexafluoropropylene chain segment of 2 to 20 wt%, and in some embodiments of the present disclosure contains a polyvinylidene fluoride chain segment of 90 to 96 wt% and a polyhexafluoropropylene chain segment of 4 to 10 wt%; and the glass transition temperature of the vinylidene fluoride-hexafluoropropylene copolymer is -60°C to -40°C.

The copolymer emulsion of vinylidene fluoride and hexafluoropropylene may be commercially available, or may be prepared by using various existing methods, or may be obtained by making vinylidene fluoride-hexafluoropropylene copolymer powder into an emulsion. According to a specific implementation of the disclosure, the copolymer emulsion of vinylidene fluoride and hexafluoropropylene is prepared by using the following method:

(1) dissolving a dispersant in water, and selectively adjusting a pH value thereof, to obtain an aqueous solution A of the dispersant; and
(2) slowly adding vinylidene fluoride-hexafluoropropylene copolymer powder into the aqueous solution A of the dispersant while stirring; and after the vinylidene fluoride-hexafluoropropylene copolymer powder is added completely, first stirring at a low speed, then stirring at a high speed, and finally performing homogeneous dispersion at a high pressure, to form the copolymer emulsion of vinylidene fluoride and hexafluoropropylene.

The dispersant is a water-soluble polymer dispersant, including two types: an ionic dispersant (polyelectrolyte) and a non-ionic dispersant. The ionic dispersant is a polycarboxylic acid dispersant that is obtained by homopolymerizing vinyl monomers containing carboxyl (for example, acrylic acid or maleic anhydride) or copolymerizing a vinyl monomer containing carboxyl and another monomer, and then performing alkali neutralization and alcohol esterification. Examples of the ionic dispersant include but are not limited to: polyacrylic acid (PAA), polyethylenimine (PEI), cetyltrimethylammonium bromide (CTAB), polyamide, polyacrylamide (PAM), an acrylic acid-acrylate copolymer, poly(acrylic acid-co-acrylamide) [P(AA/AM)], an ammonium acrylate-acrylate copolymer, poly(styrene-co-maleic anhydride) (SMA), a styrene-acrylic acid copolymer, an acrylic acid-maleic anhydride copolymer, a maleic anhydride-acrylamide copolymer, and the like. The non-ionic dispersant includes polyethylene glycol (PEG), polyvinyl alcohol (PVA), polyvinylpyrrolidone (PVP), fatty alcohol polyoxyethylene ether (JFC), and the like. The weight-average molecular weight of the dispersant is 100 g/mol to 500000 g/mol, and in some embodiments of the present disclosure , the weight-average molecular weight of the dispersant is 1000 g/mol to 100000 g/mol. The concentration of the aqueous solution A of the dispersant is 0.01 wt% to 10 wt%, and in some embodiments of the present disclosure, the concentration of the aqueous solution A of the dispersant is 0.05 wt% to 5 wt%, and in some embodiments of the present disclosure, the concentration of the aqueous solution A of the dispersant is 0.1 wt% to 2 wt%. The use amount of the dispersant is 0.05 wt% to 10 wt% of the use amount of the used vinylidene fluoride-hexafluoropropylene copolymer powder, or 0.1 wt% to 6 wt%, or 0.1 wt% to 2 wt%. When the used ionic dispersant is an anionic polymer (for example, PAM), the solution is adjusted to pH=8 to 9, and the anionic polymer may be completely dissociated, thereby effectively protecting the vinylidene fluoride-hexafluoropropylene copolymer powder, and stably dispersing the vinylidene fluoride-hexafluoropropylene copolymer powder in an aqueous phase. When the used ionic dispersant is a cationic polymer (for example, PEI or CTAB), the solution is adjusted to pH=4 to 5, and the cationic polymer may be dissociated quite well, thereby effectively protecting the vinylidene fluoride-hexafluoropropylene copolymer powder, and stably dispersing the vinylidene fluoride-hexafluoropropylene copolymer powder in an aqueous phase. When the used dispersant is a non-ionic polymer dispersant, the pH value of the solution is not adjusted.

According to an implementation of the disclosure, the bonding layer slurry contains the self-crosslinking pure acrylic emulsion and the self-crosslinking styrene acrylic emulsion and does not contain the copolymer emulsion of vinylidene fluoride and hexafluoropropylene, and a weight ratio of a solid content of the self-crosslinking pure acrylic emulsion to that of the self-crosslinking styrene acrylic emulsion is 1:(0.05 to 2) or 1:(1 to 2); or the bonding layer slurry contains the self-crosslinking pure acrylic emulsion and the copolymer emulsion of vinylidene fluoride and hexafluoropropylene and does not contain the self-crosslinking styrene acrylic emulsion, and a weight ratio of a solid content of the self-crosslinking pure acrylic emulsion to that of the copolymer emulsion of vinylidene fluoride and hexafluoropropylene is 1:(0.3 to 25) or 1:(0.4 to 19); or the bonding layer slurry contains the self-crosslinking pure acrylic emulsion, the self-crosslinking styrene acrylic emulsion, and the copolymer emulsion of vinylidene fluoride and hexafluoropropylene, and a weight ratio of a solid content of the self-crosslinking pure acrylic emulsion to that of the self-crosslinking styrene acrylic emulsion to that of the copolymer emulsion of vinylidene fluoride and hexafluoropropylene is 1:(0.01 to 2):(0.3 to 5) or 1:(0.05 to 1.5):(0.45 to 3). The inventor of the disclosure finds through in-depth research that, when the foregoing several polymer emulsions are cooperatively used according to the foregoing particular proportion, it is quite favorable to improvement in the liquid absorption rate and the conductivity of the ceramic membrane and improvement in the manufacturing performance.

According to a particular optional implementation of the disclosure, the bonding layer slurry contains a first self-crosslinking pure acrylic emulsion, a second self-crosslinking pure acrylic emulsion, and the self-crosslinking styrene acrylic emulsion and does not contain the copolymer emulsion of vinylidene fluoride and hexafluoropropylene, and a weight ratio of a solid content of the first self-crosslinking pure acrylic emulsion to that of the second self-crosslinking pure acrylic emulsion to that of the self-crosslinking styrene acrylic emulsion is (5 to 10):1: (10 to 13); or

the bonding layer slurry contains the first self-crosslinking pure acrylic emulsion, the second self-crosslinking pure acrylic emulsion, and the copolymer emulsion of vinylidene fluoride and hexafluoropropylene and does not contain the self-crosslinking styrene acrylic emulsion, and a weight ratio of a solid content of the first self-crosslinking pure acrylic emulsion to that of the second self-crosslinking pure acrylic emulsion to that of the copolymer emulsion of vinylidene fluoride and hexafluoropropylene is (5 to 15):1 :(5 to 12); or

the bonding layer slurry contains the second self-crosslinking pure acrylic emulsion and the copolymer emulsion of vinylidene fluoride and hexafluoropropylene and does not contain the self-crosslinking styrene acrylic emulsion, and a weight ratio of a solid content of the second self-crosslinking pure acrylic emulsion to that of the copolymer emulsion of vinylidene fluoride and hexafluoropropylene is 1:(5 to 20); or

the bonding layer slurry contains the second self-crosslinking pure acrylic emulsion, the self-crosslinking styrene acrylic emulsion, and the copolymer emulsion of vinylidene fluoride and hexafluoropropylene, and a weight ratio of a solid content of the second self-crosslinking pure acrylic emulsion to that of the self-crosslinking styrene acrylic emulsion to that of the copolymer emulsion of vinylidene fluoride and hexafluoropropylene is 1:(0.5 to 2):(1 to 5); or

the bonding layer slurry contains the third self-crosslinking pure acrylic emulsion, the self-crosslinking styrene acrylic emulsion, and the copolymer emulsion of vinylidene fluoride and hexafluoropropylene, and a weight ratio of a solid content of the third self-crosslinking pure acrylic emulsion to that of the self-crosslinking styrene acrylic emulsion to that of the copolymer emulsion of vinylidene fluoride and hexafluoropropylene is 1:(0.5 to 2):(1 to 5); or

the bonding layer slurry contains the first self-crosslinking pure acrylic emulsion, the second self-crosslinking pure acrylic emulsion, the self-crosslinking styrene acrylic emulsion, and the copolymer emulsion of vinylidene fluoride and hexafluoropropylene, and a weight ratio of a solid content of the first self-crosslinking pure acrylic emulsion to that of the second self-crosslinking pure acrylic emulsion to that of the self-crosslinking styrene acrylic emulsion and to that of the copolymer emulsion of vinylidene fluoride and hexafluoropropylene is (10 to 15):1 :(0.5 to 2):(5 to 10); and

an acrylate crosslinked polymer in the first self-crosslinking pure acrylic emulsion contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, an acrylate crosslinked polymer in the second self-crosslinking pure acrylic emulsion contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and an acrylate crosslinked polymer in the third self-crosslinking pure acrylic emulsion contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; the styrene-acrylate crosslinked copolymer in the self-crosslinking styrene acrylic emulsion contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; the vinylidene fluoride-hexafluoropropylene copolymer in the copolymer emulsion of vinylidene fluoride and hexafluoropropylene contains a polyvinylidene fluoride chain segment of 80 to 98 wt% and a polyhexafluoropropylene chain segment of 2 to 20 wt%; and the glass transition temperature of the acrylate crosslinked polymer in the first self-crosslinking pure acrylic emulsion is 50°C to 60°C, the glass transition temperature of the acrylate crosslinked polymer in the second self-crosslinking pure acrylic emulsion is -20°C to - 5°C, the glass transition temperature of the acrylate crosslinked polymer in the third self-crosslinking pure acrylic emulsion is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

According to the disclosure, in some embodiments of the present disclosure, the bonding layer slurry further contains at least one of a copolymer emulsion of acrylonitrile and acrylate, a vinyl chloride-propylene emulsion, and a butadiene-styrene latex. When the bonding layer slurry further contains a copolymer emulsion of acrylonitrile and acrylate, it is favorable to improvement in the ion conductivity of the battery membrane inside the battery; and when the bonding layer slurry further contains a vinyl chloride-propylene emulsion and/or a butadiene-styrene latex, it is favorable to reduction in the liquid absorption rate of the battery membrane, so that the liquid absorption rate cannot go so far as to be excessively high. If the liquid absorption rate is excessively high, the positive electrode and the negative electrode inside the battery are lack of an electrolyte and consequently the performance of the battery deteriorates.

When the bonding layer slurry further contains the copolymer emulsion of acrylonitrile and acrylate, a weight ratio of a solid content of the copolymer emulsion of acrylonitrile and acrylate to that of the self-crosslinking pure acrylic emulsion is (0.05 to 2):1, and in some embodiments of the present disclosure, a weight ratio of a solid content of the copolymer emulsion of acrylonitrile and acrylate to that of the self-crosslinking pure acrylic emulsion is (0.08 to 1.85):1. When the bonding layer slurry further contains the vinyl chloride-propylene emulsion, a weight ratio of a solid content of the vinyl chloride-propylene emulsion to that of the self-crosslinking pure acrylic emulsion is (0.15 to 7):1, and in some embodiments of the present disclosure, a weight ratio of a solid content of the vinyl chloride-propylene emulsion to that of the self-crosslinking pure acrylic emulsion is (0.2 to 6):1. When the bonding layer slurry further contains the butadiene-styrene latex, a weight ratio of a solid content of the butadiene-styrene latex to that of the self-crosslinking pure acrylic emulsion is (0.05 to 2):1, and in some embodiments of the present disclosure, a weight ratio of a solid content of the butadiene-styrene latex to that of the self-crosslinking pure acrylic emulsion is (0.08 to 1.85):1.

Moreover, to be more favorable to attachment of the bonding layer slurry, in some embodiments of the present disclosure, the total solid content of the bonding layer slurry is 0.5 wt% to 25 wt%, and in some embodiments of the present disclosure , the total solid content of the bonding layer slurry is 1 wt% to 20 wt%, and in some embodiments of the present disclosure , the total solid content of the bonding layer slurry is 1 wt% to 10 wt%.

A spraying method and/or a screen-printing method is used as the attaching method, and discontinuous coverage is formed by using the spraying method and/or the screen-printing method, thereby directly forming a porous membrane having the foregoing porosity. In this way, a porous (discontinuous) self-crosslinking polymer coating can be prepared, and a separation process is not required.

In the disclosure, conditions of the spraying and the screen-printing are not particularly limited. For example, the temperature of the spraying is 30°C to 80°C, or 40°C to 75°C. The temperature of the screen-printing is 30°C to 80°C, or 40°C to 75°C.

The use amount of the bonding layer slurry may be selected to enable the single-sided thickness of the formed bonding layer to be 0.1 $\mu$m to 1 $\mu$m, or to be 0.2 $\mu$m to 0.6 $\mu$m.

The disclosure further provides a lithium-ion battery separator prepared by using the foregoing method.

Moreover, the disclosure further provides a lithium-ion battery, and the lithium-ion battery includes a positive electrode, a negative electrode, an electrolyte, and a membrane, where the membrane is the foregoing ceramic membrane.

The electrolyte is well known by a person skilled in the art, and is usually formed by an electrolyte lithium salt and an organic solvent. A dissociable lithium salt is used as the electrolyte lithium salt. For example, the electrolyte lithium salt may be selected from at least one of lithium hexafluorophosphate ($LiPF_6$), lithium perchlorate ($LiClO_4$), lithium tetrafluoroborate ($LiBF_4$), and the like, and the organic solvent may be selected from at least one of ethylene carbonate (EC), propylene carbonate (PC), dimethyl carbonate (DMC), ethyl methyl carbonate (EMC), diethyl carbonate (DEC), vinylene carbonate (VC), and the like. In some embodiments of the present disclosure, the concentration of the electrolyte lithium salt in the electrolyte is 0.8 mol/L to 1.5 mol/L.

The positive electrode is made by mixing a positive electrode material used for the lithium-ion battery, a conductive agent, and a binder into a slurry and applying the slurry onto an aluminum foil. The used positive electrode material includes any positive electrode material that may be used for the lithium-ion battery, for example, at least one of lithium cobalt oxide ($LiCoO_2$), lithium nickel oxide ($LiNiO_2$), lithium manganese oxide ($LiMn_2O_4$), lithium iron phosphate ($LiFePO_4$), and the like.

The negative electrode is made by mixing a negative electrode material used for the lithium-ion battery, a conductive agent, and a binder into a slurry and applying the slurry onto a copper foil. The used negative electrode material includes any negative electrode material that may be used for the lithium-ion battery, for example, at least one of graphite, soft carbon, hard carbon, and the like.

A main improvement of the lithium-ion battery provided in the disclosure is in that a novel lithium-ion battery separator is used, and an arrangement manner (connection manner) of the positive electrode, the negative electrode, the battery membrane, and the electrolyte may be the same as that in the prior art. This can be known by each person skilled in the art, and details are not described herein.

A method for preparing a lithium-ion battery provided in the disclosure includes: stacking or winding a positive electrode, a membrane, and a negative electrode sequentially into an electrode core, and then injecting an electrolyte into the electrode core and sealing, where the membrane is the foregoing lithium-ion battery separator.

The materials or formations of the positive electrode, the negative electrode, and the electrolyte are described above, and details are not described herein.

The disclosure is described in detail below by using embodiments.

In the following embodiments and comparison examples, physicochemical parameters of raw materials are as follows:

(1) Components of a self-crosslinking pure acrylic emulsion:

1.1. 1040: a polybutyl acrylate chain segment accounts for 15 wt%, a polymethyl methacrylate chain segment accounts for 75 wt%, a polyethylene acrylate chain segment accounts for 5 wt%, a polyacrylic acid chain segment accounts for 5 wt%, the glass transition temperature Tg=54°C, and the solid content is 50 wt%, Shanghai Aigao Chemical Co., Ltd.;

1.2. 1005: a polybutyl acrylate chain segment accounts for 55 wt%, a polymethyl methacrylate chain segment accounts for 35 wt%, a polyethylene acrylate chain segment accounts for 5 wt%, a polyacrylic acid chain segment accounts for 5 wt%, the glass transition temperature Tg=-12°C, and the solid content is 50 wt%, Shanghai Aigao Chemical Co., Ltd.; and

1.3. 1020: a polybutyl acrylate chain segment accounts for 25 wt%, a polymethyl methacrylate chain segment accounts for 65 wt%, a polyethylene acrylate chain segment accounts for 5 wt%, a polyacrylic acid chain segment accounts for 5 wt%, the glass transition temperature Tg=40°C, and the solid content is 50 wt%, Shanghai Aigao Chemical Co., Ltd.

(2) Components of a self-crosslinking styrene acrylic emulsion:
S601: a polyphenyl ethylene chain segment accounts for 45 wt%, a polybutyl acrylate chain segment accounts for 35 wt%, a polymethyl methacrylate chain segment accounts for 10 wt%, a polyethylene acrylate chain segment accounts for 5 wt%, a polyacrylic acid chain segment accounts for 5 wt%, the glass transition temperature Tg=22°C, and the solid content is 50 wt%, Shanghai Aigao Chemical Co., Ltd.
(3) Copolymer emulsion of vinylidene fluoride and hexafluoropropylene:
10278: a polyvinylidene fluoride chain segment accounts for 95 wt%, a polyhexafluoropropylene chain segment accounts for 5 wt%, the weight-average molecular weight Mw=450000, the glass transition temperature is -55°C, and the solid content is 30 wt%, Arkema.

In the following embodiments and comparison examples, performance parameters are measured according to the following method:

(1) Test of the surface density of a ceramic layer is: taking a membrane paper of 10 cm$^2 \times$10 cm$^2$ (a ceramic membrane before a heat-resistant layer is formed) and a PE basement membrane, weighing respective weights of ml (mg) and m2 (mg) thereof, measuring respective membrane thicknesses of d1 ($\mu$m) and d2 ($\mu$m) thereof, where the surface density of the ceramic layer at a unit thickness=(m1-m2)$\times \rho_{Al2O3}$/[10$\times$10$\times$(d1-d2)$\times$10$^{-4} \times \rho$], where $\rho_{Al2O3}$ is the true density of aluminum oxide, and $\rho$ is the true density of used ceramic particles.
(2) Test of the air permeability (Gurley value) of the ceramic layer is: cutting the ceramic membrane into a ceramic membrane sample having an area of 6.45 cm$^2$, and measuring, by using a Gurley value tester GURLEY-4110 and at a pressure (height of water column) of 12.39 cm, the time (s/100ml) required by gas (air) of 100 ml to permeate the foregoing ceramic membrane sample, where a smaller value thereof indicates better air permeability.
(3) Test of the peeling strength of the ceramic layer is: preparing, respectively according to respective processes of the following embodiments and comparison examples, a ceramic membrane including only a single-sided ceramic layer and not including a heat-resistant layer and a bonding layer, tailoring a sample of 40 mm$\times$100 mm from the ceramic membrane, respectively fixing two surfaces of the ceramic membrane onto a stationary fixture and a movable fixture by using an adhesive tape, and reversely stretching at 180°C to peel the ceramic layer from a base material membrane, where if a larger pulling force is required, the peeling strength of the ceramic membrane is higher, to indicate that the bonding strength is higher.
(4) Test of the thermal stability of the ceramic membrane is: tailoring a ceramic membrane test sample of 5 cm$\times$5 cm from the ceramic membrane, respectively placing the ceramic membrane test sample in an oven at 120°C and 160°C, baking the ceramic membrane test sample for 1 hours, and comparing areas before and after the baking to determine a change, and taking a ratio of an area change value to an original area (shrinkage percentage) to measure the thermal stability of the ceramic membrane, where if the ratio does not exceed 5%, the thermal stability is A, and if the ratio is greater than 5%, the thermal stability is B.
(5) Test of the porosity of the heat-resistant layer is: tailoring a heat-resistant layer sample of a particular volume, weighing, then immersing the heat-resistant layer sample □in isobutanol, and measuring the weight of the sample after adsorption and balancing, where

$$\text{the porosity of the heat-resistant layer} = \frac{\text{Mass after adsorption - Mass before adsorption}}{\rho_{isobutanol}\text{Sample volume}} \times 100\%.$$

(6) Test of the mechanical strength is: measuring, by using universal testing machines (each of which is calibrated) of Shenzhen Junrui, the stretching performance and the needling strength of the lithium-ion battery separator, where each testing temperature is 25°C.
(7) Test of the thermal shrinkage percentage is: tailoring the lithium-ion battery separator into a sample of 6 cm$\times$6 cm, placing the sample into an oven, respectively baking the sample for 1h at 120°C, 140°C, 160°C, and 180°C, measuring the length and the width of the sample, and calculating the thermal shrinkage percentage according to the following formula:

thermal shrinkage percentage=(1–the length of the sample after thermal shrinkage/6)×100%.

(8) Test of the porosity of the bonding layer is: tailoring each of porous self-crosslinking polymer membranes Sb1 to Sb13 obtained in Embodiments 11 to 23 into a wafer whose diameter is 17 mm, measuring the thickness of the wafer, weighing the mass of the wafer, then immersing the wafer in n-butyl alcohol for 2h, then taking out the wafer, drying liquid on the surface of the membrane by using filter paper, and weighing the mass in this case. The porosity is calculated according to the following formula:

$$P(\%) = \frac{M - M_0}{\rho_{BuOH} \pi r^2 d} \times 100\%$$

where P is the porosity, $M_0$ is the mass (mg) of a dry membrane, M is the mass (mg) after immersion in the n-butyl alcohol for 2h, r is the radius (mm) of the membrane, and d is the thickness ($\mu$m) of the membrane.

(9) Surface density of the bonding layer is: respectively taking a PE basement membrane of 0.2 m×0.2 m and a PE basement membrane containing the bonding layer, and weighing respective weights of $M_0$(g) and M(g) thereof, where the surface density =[(M-$M_0$)/0.04] g/m$^2$.

(10) Test of the liquid absorption rate of the bonding layer is: tailoring each of porous self-crosslinking polymer membranes Sb1 to Sb13 obtained in Embodiments 11 to 23 into a wafer whose diameter is 17 mm, drying the wafer, weighing the mass of the wafer, then immersing the wafer in an electrolyte (the electrolyte contains 32.5 wt% of EC (ethylene carbonate), 32.5 wt% of EMC (ethyl methyl carbonate), 32.5 wt% of DMC (dimethyl carbonate), 2.5 wt% of VC (vinylene carbonate), and 1 mol/L of LiPF$_6$ (lithium hexafluorophosphate)) for 24h, then taking out the wafer, drying liquid on the surface of the membrane by using filter paper, weighing the mass in this case, where all operations are performed in a glove box full of argon, and then calculating the liquid absorption rate according to the following formula:

liquid absorption rate%=(Wi–W)/W×100%

where W is the mass (g) of the dry membrane; and Wi is the mass (g) of the dry membrane after being immersed in the electrolyte for 24h.

(11) Test of the ion conductivity is: using an alternating-current impedance test, specifically, tailoring each of the lithium-ion battery separators prepared in the embodiments and the comparison examples into a wafer whose diameter is 17 mm, drying the wafer, then placing the wafer between two stainless steel (SS) electrodes, absorbing a sufficient amount of electrolyte (the electrolyte contains 32.5 wt% of EC (ethylene carbonate), 32.5 wt% of EMC (ethyl methyl carbonate), 32.5 wt% of DMC (dimethyl carbonate), 2.5 wt% of VC (vinylene carbonate), and 1 mol/L of LiPF$_6$ (lithium hexafluorophosphate)), sealing the electrolyte in a 2016-type button cell, and then performing an alternating-current impedance experiment, where an intersection point between a linear part and a real axis is the bulk resistance of the electrolyte, and therefore the ion conductivity may be calculated as follows: $\sigma$=L/A·R (where L indicates the thickness (cm) of the membrane, A is the contact area (cm$^2$) between a stainless steel plate and the membrane, and R is the bulk resistance (mS) of the electrolyte).

Embodiment 1 (lithium-ion battery separator of a two-layered structure of porous basement membrane (PE basement membrane)-heat-resistant layer)

This embodiment is used to describe a lithium-ion battery separator and a method for preparing same provided in the disclosure.

Polyetherimide (PEI, which is commercially available from SABIC Innovative Plastics (Shanghai) Co., Ltd. and whose melting point is 370°C to 410°C, the same below) and Al$_2$O$_3$ particles (whose average particle size is 200 nm, the same below) in a weight ratio 10:1 (that is, 100:10) are added into N-methyl-2-pyrrolidinone (NMP), and then the polyetherimide, the Al$_2$O$_3$ particles, and the N-methyl-2-pyrrolidinone are magnetically stirred in water bath of 70°C and fully mixed, to form a spinning solution whose concentration is 15 wt%.

One side surface of a PE basement membrane (which is commercially available from Japan SK Corporation and whose trade mark is BD1201 and thickness is 11 $\mu$m, the same below) wraps a roller (a collection device), and on a surface of the PE basement membrane, electrostatic spinning is performed on the foregoing spinning solution by using a needle electrostatic spinning method. Parameters for adjusting electrostatic spinning are as follows: the receiving distance is 12 cm, the temperature is 25°C, the humidity is 50%, the inner diameter of a needle is 0.46 mm, a movement speed of the needle is 6.6 mm/sec, the voltage is 10 kV, the stream velocity is 0.3 mL/h, and the rotational speed of the roller is 2000 rpm.

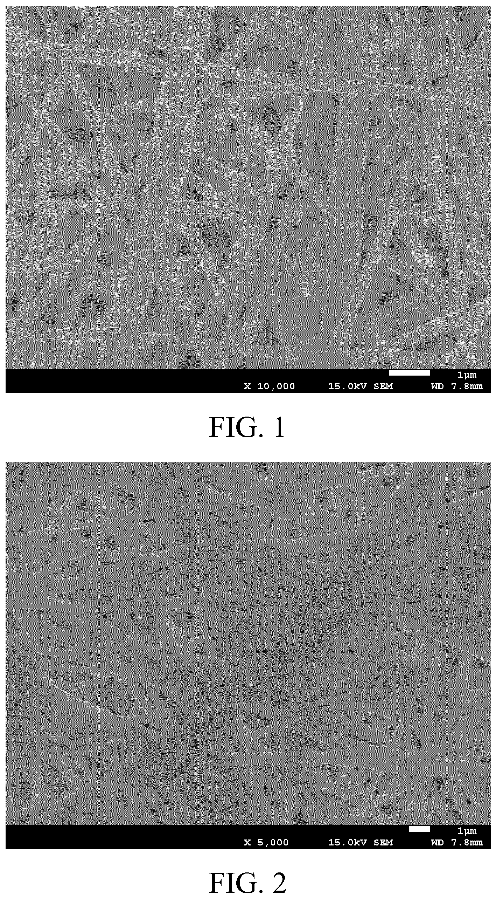

After electrostatic spinning ends, the PE basement membrane is taken down, mould pressing is performed for 1 min at 100°C and 15 MPa, and then air blowing and drying are performed for 24h at 50°C, to obtain a lithium-ion battery separator F1 on which a heat-resistant layer (whose thickness is 3 $\mu$m) is formed, where a scanning electron micrograph (SEM) picture of the lithium-ion battery separator F1 is shown in FIG. 1 and FIG. 2. As shown in FIG. 1 and FIG. 2, it may be seen that the heat-resistant layer has a fiber-network shaped structure, where thicknesses of fibers are relatively even, a phenomenon of bead and polymer conglomeration does not occur, and the fibers are intertwined with each other, to form a large quantity of apertures. Moreover, inorganic particles can be clearly seen on surfaces of some fibers, and the inorganic particles are not conglomerated.

The diameter of the fiber in the SEM image is measured by using TEM Macrography software, data is recorded, and finally calculation is performed to learn that the average fiber diameter is 300 nm, the surface density of the heat-resistant layer is 3.3 g/m$^2$, and the porosity is 85%. Moreover, the transverse stretching strength and the longitudinal stretching strength of the lithium-ion battery separator are respectively 145 Mpa and 148 MPa, the needling strength is 0.530 kgf, and the ion conductivity is 7.8 mS/cm. The lithium-ion battery separator is baked for 1h at 120°C, 140°C, 160°C, and 180°C, transverse thermal contraction percentages are respectively: 0%, 0%, 3.8%, and 6.2%, and longitudinal thermal contraction percentages are respectively: 0%, 0%, 4%, and 6.6%.

Comparison example 1

This comparison example is used to describe a reference lithium-ion battery separator and a method for preparing same.

The PE basement membrane in Embodiment 1 is used as the lithium-ion battery separator in this comparison example. Through testing, the transverse stretching strength and the longitudinal stretching strength of the lithium-ion battery separator are respectively 150 Mpa and 152 MPa, the needling strength is 0.501 kgf, and the ion conductivity is 7.9 mS/cm. Moreover, the lithium-ion battery separator is baked for 1h at each of 120°C, 140°C, 160°C, and 180°C. The result indicates that, at 120°C, the transverse thermal shrinkage percentage and the longitudinal thermal shrinkage percentage are respectively: 7% and 75.2%, and at a temperature above 140°C (which includes 140°C, 160°C, and 180°C), the lithium-ion battery separator is melted into a ball, and the shrinkage percentage is above 95%.

Embodiment 2 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane:
2 kg of Al$_2$O$_3$ particles (whose average particle size is 400 nm), 0.01 kg of sodium polyacrylate (whose number-average molecular weight is 9000 and which is commercially available from Guangzhou Yuanchang Commerce Co., Ltd.), 0.024 kg of sodium carboxymethylcellulose (whose viscosity in an aqueous solution of 1 wt% is 2500 to 3000 mPa·s, which is commercially available from Xinxiang Heluelida Power Material Co., Ltd., and whose trade mark is BTT-3000), and water are mixed evenly, to obtain a mixture in which the solid content of Al$_2$O$_3$ is 30 wt%, the mixture is stirred for 1.5 hours at 6000 rpm, then 0.02 kg of 3-glycidyloxypropyltrimethoxysilane is added to continue stirring for 1.5 hours, then 0.1 kg of polyacrylate binder (whose crosslinked monomer is N-methylolacrylamide, whose content is 4 wt%, and whose glass transition temperature is -20°C) is added, stirring is performed for 1.5 hours at 3000 rpm, then 0.08 kg of sodium dodecylbenzenesulfonate is added, and then stirring is performed for 0.5 hour at 3000 rpm, to obtain a ceramic layer slurry.
The foregoing ceramic layer slurry is applied onto two side surfaces of a PE basement membrane (which is commercially available from Japan SK Corporation and whose trade mark is BD1201, the same below) whose thickness is 11 $\mu$m, and drying is performed to obtain a ceramic layer whose thickness is 1 $\mu$m on each of the two side surfaces of the basement membrane, to obtain a ceramic membrane C1. Through testing, the surface density of the ceramic layer on each of two sides of the ceramic membrane C1 at the thickness of 1 $\mu$m is 2.11 mg/cm$^2$, the air permeability is 202 s/100ml, the peeling strength is 5.4 N, the thermal stability at 120°C is A, and the thermal stability at 160°C is A.
(2) Prepare a heat-resistant fiber layer: with reference to the manner in Embodiment 1, electrostatic spinning is performed on the surface of the ceramic layer of the ceramic membrane C1, to obtain a lithium-ion battery separator F2 on which the heat-resistant layer is formed, the average diameter of the fiber in the heat-resistant layer is 320 nm, the surface density of the heat-resistant layer is 3.3 g/m$^2$, and the porosity is 82%. Moreover, the transverse stretching strength and the longitudinal stretching strength of the lithium-ion battery separator are respectively 120 Mpa and 125 MPa, the needling strength is 0.53 kgf, and the ion conductivity is 7.7 mS/cm. The lithium-ion battery separator is baked for 1h at 120°C, 140°C, 160°C, and 180°C, transverse thermal contraction percentages are respectively: 0%, 0%, 2.3%, and 4%, and longitudinal thermal contraction percentages are respectively: 0%, 0%, 2.4%, and 5%.

Comparison example 2

This comparison example is used to describe a reference lithium-ion battery separator and a method for preparing same.

A lithium-ion battery separator is prepared according to the method in Embodiment 2, and a difference is that, the use amount of the ceramic layer slurry enables the thickness of the ceramic layer to be 4 μm, the step of forming the heat-resistant layer is not included, and the lithium-ion battery separator is obtained. Through testing, the transverse stretching strength and the longitudinal stretching strength of the lithium-ion battery separator are respectively 132 Mpa and 143 MPa, the needling strength is 0.512 kgf, and the ion conductivity is 6.9 mS/cm. Moreover, the lithium-ion battery separator is baked for 1h at 120°C, 140°C, 160°C, and 180°C, transverse thermal contraction percentages are respectively: 0.3%, 1%, 6.5%, and 86%, and longitudinal thermal contraction percentages are respectively: 0.5%, 1.5%, 5.5%, and 82.2%.

Comparison example 3

This comparison example is used to describe a reference lithium-ion battery separator and a method for preparing same.

A lithium-ion battery separator is prepared according to the method in Embodiment 2, and a difference is that, a manner of forming the heat-resistant layer is an applying method, and the lithium-ion battery separator is obtained, where the heat-resistant layer does not have a porous structure. Through testing, the transverse stretching strength and the longitudinal stretching strength of the lithium-ion battery separator are respectively 125 Mpa and 130 MPa, the needling strength is 0.53 kgf, and the ion conductivity is 0.05 mS/cm. Moreover, the lithium-ion battery separator is baked for 1h at 120°C, 140°C, 160°C, and 180°C, transverse thermal contraction percentages are respectively: 0%, 0%, 0.2%, and 2%, and longitudinal thermal contraction percentages are respectively: 0%, 0%, 1.5%, and 2.4%.

Embodiment 3 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane: the same as that in Embodiment 2, and a ceramic membrane C1 is obtained.
(2) Prepare a heat-resistant fiber layer: Polyetherimide and Al$_2$O$_3$ particles in a weight ratio 95:5 (that is, 100:5.26) are added into N-methyl-2-pyrrolidinone (NMP), and then the polyetherimide, the Al$_2$O$_3$ particles, and the N-methyl-2-pyrrolidinone are magnetically stirred in water bath of 70°C and fully mixed, to form a spinning solution whose concentration is 20 wt%.

According to the method in Embodiment 2, electrostatic spinning is performed, to obtain a lithium-ion battery separator F3 on which the heat-resistant layer (whose single-sided thickness is 3 μm) is formed, the average diameter of the fiber in the heat-resistant layer is 258 nm, the surface density of the heat-resistant layer is 3.2 g/m$^2$, and the porosity is 84%. Moreover, the transverse stretching strength and the longitudinal stretching strength of the lithium-ion battery separator are respectively 122 Mpa and 126 MPa, the needling strength is 0.530 kgf, and the ion conductivity is 7.7 mS/cm. The lithium-ion battery separator is baked for 1h at 120°C, 140°C, 160°C, and 180°C, transverse thermal contraction percentages are respectively: 0%, 0%, 3.2%, and 4.5%, and longitudinal thermal contraction percentages are respectively: 0%, 0%, 3.5%, and 4.8%.

Embodiment 4 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane: the same as that in Embodiment 2, and a ceramic membrane C1 is obtained.

(2) Prepare a heat-resistant fiber layer: Polyetherimide and $Al_2O_3$ particles in a weight ratio 17:3 (that is, 100:17.6) are added into N-methyl-2-pyrrolidinone (NMP), and then the polyetherimide, the $Al_2O_3$ particles, and the N-methyl-2-pyrrolidinone are magnetically stirred in water bath of 70°C and fully mixed, to form a spinning solution whose concentration is 10 wt%.

According to the method in Embodiment 2, electrostatic spinning is performed, to obtain a lithium-ion battery separator F4 on which the heat-resistant layer (whose thickness is 3 $\mu$m) is formed, the average diameter of the fiber in the heat-resistant layer is 420 nm, the surface density of the heat-resistant layer is 4.1 g/m$^2$, and the porosity is 87%. Moreover, the transverse stretching strength and the longitudinal stretching strength of the lithium-ion battery separator are respectively 118 Mpa and 122 MPa, the needling strength is 0.530 kgf, and the ion conductivity is 6.9 mS/cm. The lithium-ion battery separator is baked for 1h at 120°C, 140°C, 160°C, and 180°C, transverse thermal contraction percentages are respectively: 0%, 0%, 1.2%, and 4%, and longitudinal thermal contraction percentages are respectively: 0%, 0%, 2.3%, and 4.5%.

Embodiment 5 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane: the same as that in Embodiment 2, and a ceramic membrane C1 is obtained.

(2) Prepare a heat-resistant fiber layer: Polyetherimide and $Al_2O_3$ particles in a weight ratio 2:1 (that is, 100:50) are added into N-methyl-2-pyrrolidinone (NMP), and then the polyetherimide, the $Al_2O_3$ particles, and the N-methyl-2-pyrrolidinone are magnetically stirred in water bath of 70°C and fully mixed, to form a spinning solution whose concentration is 25 wt%.

According to the method in Embodiment 2, electrostatic spinning is performed, to obtain a lithium-ion battery separator F5 on which the heat-resistant layer (whose thickness is 3 $\mu$m) is formed, the average diameter of the fiber in the heat-resistant layer is 420 nm, the surface density of the heat-resistant layer is 4.1 g/m$^2$, and the porosity is 87%. Moreover, the transverse stretching strength and the longitudinal stretching strength of the lithium-ion battery separator are respectively 114 Mpa and 118 MPa, the needling strength is 0.530 kgf, and the ion conductivity is 6.5 mS/cm. The lithium-ion battery separator is baked for 1h at 120°C, 140°C, 160°C, and 180°C, transverse thermal contraction percentages are respectively: 0%, 0%, 1.2%, and 3.5%, and longitudinal thermal contraction percentages are respectively: 0%, 0%, 2.3%, and 4.2%.

Embodiment 6 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane:

2 kg of boehmite (whose average particle size is 300 nm), 0.016 kg of sodium polyacrylate (whose number-average molecular weight is 9000 and which is commercially available from Guangzhou Yuanchang Commerce Co., Ltd.), 0.014 kg of sodium carboxymethyl nano-crystalline cellulose (whose viscosity in an aqueous solution of 1 wt% is 2500 to 3000 mPa·s, which is commercially available from Xinxiang Heluelida Power Material Co., Ltd., and whose trade mark is BTT-3000), and water are mixed evenly, to obtain a mixture in which the solid content of boehmite is 50 wt%, the mixture is stirred for 1.5 hours at 8000 rpm, then 0.01 kg of 3-glycidyloxypropyltrimethoxysilane is added to continue stirring for 1.5 hours, then 0.12 kg of polyacrylate binder (whose crosslinked monomer is N-methylolacrylamide, whose content is 3 wt%, and whose glass transition temperature is -40°C) is added, stirring is performed for 1.5 hours at 3000 rpm, then 0.08 kg of sodium dodecylbenzenesulfonate is added, and stirring is performed for 1.5 hours at 3000 rpm, to obtain a ceramic layer slurry.

The foregoing ceramic layer slurry is applied onto one side surface of a PE basement membrane whose thickness is 11 $\mu$m, and drying is performed to obtain a ceramic layer whose thickness is 2 $\mu$m on the one side surface of the basement membrane, to obtain a ceramic membrane C2. Through testing, the surface density of the ceramic layer of the ceramic membrane C2 at the thickness of 1 $\mu$m is 2.02 mg/cm$^2$, the air permeability is 198 s/100ml, the peeling strength is 5.6 N, the thermal stability at 120°C is A, and the thermal stability at 160°C is A.

(2) Prepare a heat-resistant fiber layer: poly(ether ether ketone) (PEEK, which is commercially available from Germany Evonik Corporation and whose melting point is 334°C) and 3 g of TiO$_2$ particles (whose average particle size is 50 $\mu$m) are added into N-methyl-2-pyrrolidinone (NMP), and then the poly(ether ether ketone), the TiO$_2$ particles, and the N-methyl-2-pyrrolidinone are magnetically stirred in water bath of 70°C and fully mixed, to form a spinning solution whose concentration is 15 wt%.

With reference to the manner in Embodiment 2, electrostatic spinning is performed on the surface of the ceramic layer of the ceramic membrane C2, to obtain a lithium-ion battery separator F6 on which the heat-resistant layer is formed, the average diameter of the fiber in the heat-resistant layer is 320 nm, the surface density of the heat-resistant layer is 3.3 g/m$^2$, and the porosity is 82%. Moreover, the transverse stretching strength and the longitudinal stretching strength of the lithium-ion battery separator are respectively 123 Mpa and 129 MPa, the needling strength is 0.53 kgf, and the ion conductivity is 7.7 mS/cm. The lithium-ion battery separator is baked for 1h at 120°C, 140°C, 160°C, and 180°C, transverse thermal contraction percentages are respectively: 0%, 0%, 3.3%, and 5%, and longitudinal thermal contraction percentages are respectively: 0%, 0%, 3.8%, and 6.1%.

Embodiment 7 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane:

2 kg of titanium dioxide particles (whose average particle size is 500 nm), 0.008 kg of sodium polyacrylate (whose number-average molecular weight is 9000 and which is commercially available from Guangzhou Yuanchang Commerce Co., Ltd.), 0.03 kg of sodium carboxymethyl nano-crystalline cellulose (whose viscosity in an aqueous solution of 1 wt% is 2500 to 3000 mPa·s, which is commercially available from Xinxiang Heluelida Power Material Co., Ltd., and whose trade mark is BTT-3000), and water are mixed evenly, to obtain a mixture in which the solid content of titanium dioxide is 25 wt%, the mixture is stirred for 1.5 hours at 4000 rpm, then 0.024 kg of 3-glycidyloxypropyltrimethoxysilane is added to continue stirring for 1.5 hours, then 0.08 kg of polyacrylate binder (whose crosslinked monomer is hydroxymethyl acrylate, whose content is 5 wt%, and whose glass transition temperature is 0°C) is added, stirring is performed for 1.5 hours at 3000 rpm, then 0.08 kg of sodium dodecylbenzenesulfonate is added, and stirring is performed for 1.5 hours at 3000 rpm, to obtain a ceramic layer slurry.

The foregoing ceramic layer slurry is applied onto one side surface of a PE basement membrane whose thickness is 11 $\mu$m, and drying is performed to obtain a ceramic layer whose thickness is 3.5 $\mu$m on the one side surface of the basement membrane, to obtain a ceramic membrane C2. Through testing, the surface density of the ceramic layer of the ceramic membrane C2 at the thickness of 1 $\mu$m is 2.05 mg/cm$^2$, the air permeability is 200 s/100ml, the peeling strength is 5.7 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C3, to obtain a lithium-ion battery separator F7 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 117 Mpa and 121 MPa, the needling strength is 0.53 kgf, and the ion conductivity is 7.6 mS/cm. The lithium-ion battery separator is baked for 1h at 120°C, 140°C, 160°C, and 180°C, transverse thermal contraction percentages are respectively: 0%, 0%, 2.5%, and 4.2%, and longitudinal thermal contraction percentages are respectively: 0%, 0%, 2.5%, and 5.5%.

Embodiment 8 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane:

The preparation is performed according to the method in Embodiment 2, and a difference is in that, when a ceramic layer slurry is prepared, the use amount of a polyacrylate binder is 0.06 kg, and the content of a crosslinked monomer in the polyacrylate binder is 7 wt%, to obtain a ceramic membrane C4. Through testing, the surface density of the ceramic layer on each of two sides of the ceramic membrane C4 at a thickness of 1 $\mu$m is 1.95 mg/cm$^2$, the air permeability is 208 s/100ml, the peeling strength is 4.3 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C4, to obtain a lithium-ion battery separator F8 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 121 Mpa and 125 MPa, the needling strength is 0.53 kgf, and the ion conductivity is 7.5 mS/cm. The lithium-ion battery separator is baked for 1h at 120°C, 140°C, 160°C, and 180°C, transverse thermal contraction percentages are respectively: 0%, 0%, 2.8%, and 4.2%, and longitudinal thermal contraction percentages are respectively: 0%, 0%, 2.6%, and 5.2%.

Embodiment 9 (lithium-ion battery separator of a three-layered structure of heat-resistant layer-porous basement membrane (ceramic membrane)-heat-resistant layer)

(1) Prepare a ceramic membrane:

The preparation is performed according to the method in Embodiment 2, and a difference is in that, when a ceramic layer slurry is prepared, the use amount of a polyacrylate binder is 0.12 kg, the content of a crosslinked monomer in the polyacrylate binder is 5 wt%, and 3-glycidyloxypropyltrimethoxysilane is not added, to obtain a ceramic membrane C5. Through testing, the surface density of the ceramic layer on each of two sides of the ceramic membrane C5 at a thickness of 1 $\mu$m is 1.91 mg/cm$^2$, the air permeability is 212 s/100ml, the peeling strength is 4.5 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C5, to obtain a lithium-ion battery separator F9 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 119 Mpa and 125 MPa, the needling strength is 0.53 kgf, and the ion conductivity is 7.4 mS/cm. The lithium-ion battery separator is baked for 1h at 120°C, 140°C, 160°C, and 180°C, transverse thermal contraction percentages are respectively: 0%, 0%, 3.6%, and 5.7%, and longitudinal thermal contraction percentages are respectively: 0%, 0%, 3.1%, and 5.9%.

Embodiment 10 (lithium-ion battery separator of a three-layered structure of heat-resistant layer-porous basement membrane (ceramic membrane)-heat-resistant layer)

This embodiment is used to describe a lithium-ion battery separator and a method for preparing same provided in the disclosure.

(1) Prepare a ceramic membrane:

The preparation is performed according to the method in Embodiment 2, and a difference is in that, when a ceramic layer slurry is prepared, the use amount of a polyacrylate binder is 0.08 kg, and the content of a crosslinked monomer in the polyacrylate binder is 2 wt%, to obtain a ceramic membrane C6. Through testing, the surface density of the ceramic layer on each of two sides of the ceramic membrane C6 at a thickness of 1 $\mu$m is 2.00 mg/cm$^2$, the air permeability is 207 s/100ml, the peeling strength is 4.6 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C6, to obtain a lithium-ion battery separator F10 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 120 Mpa and 122 MPa, the needling strength is 0.54 kgf, and the ion conductivity is 7.4 mS/cm. The lithium-ion battery separator is baked for 1h at 120°C, 140°C, 160°C, and 180°C, transverse thermal contraction percentages are respectively: 0%, 0%, 3%, and 4.5%, and longitudinal thermal contraction percentages are respectively: 0%, 0%, 2.8%, and 5.8%.

Embodiment 11 (lithium-ion battery separator of a two-layered structure of porous basement membrane (ceramic membrane)-heat-resistant layer, where a ceramic layer is a non-optional ceramic layer)

This embodiment is used to describe a lithium-ion battery separator and a method for preparing same provided in the disclosure.

(1) Prepare a ceramic membrane:

The preparation is performed according to the method in Embodiment 2, and a difference is in that, the average particle size of aluminum oxide is 700 nm, and a ceramic membrane C7 is obtained. Through testing, the surface density of the ceramic layer on each of two sides of the ceramic membrane C7 at a thickness of 1 $\mu$m is 2.11 mg/cm$^2$, the air permeability is 205 s/100ml, the peeling strength is 4.7 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C7, to obtain a lithium-ion battery separator F11 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 121 Mpa and 125 MPa, the needling strength is 0.53 kgf, and the ion conductivity is 7.1 mS/cm. The lithium-ion battery separator is baked for 1h at 120°C, 140°C, 160°C, and 180°C, transverse thermal contraction percentages are respectively: 0%, 0%, 3%, and 6%, and longitudinal thermal contraction percentages are respectively: 0%, 0%, 3.5%, and 6.5%.

Embodiment 12 (lithium-ion battery separator of a two-layered structure of porous basement membrane (ceramic membrane)-heat-resistant layer, where a ceramic layer is a non-optional ceramic layer)

This embodiment is used to describe a lithium-ion battery separator and a method for preparing same provided in the disclosure.

(1) Prepare a ceramic membrane:

The preparation is performed according to the method in Embodiment 2, and a difference is in that, the average particle size of aluminum oxide is 250 nm, and a ceramic membrane C8 is obtained. Through testing, the surface density of the ceramic layer on each of two sides of the ceramic membrane C8 is 1.91 mg/cm$^2$, the air permeability is 208 s/100ml, the peeling strength is 4.8 N, the thermal stability at 120°C is A, and the thermal stability at 160°C is A.

(2) Prepare a heat-resistant fiber layer:

With reference to the manner in Embodiment 2, electrostatic spinning is performed on the surface of the ceramic layer of the ceramic membrane C8, to obtain a lithium-ion battery separator F11 on which the heat-resistant layer is formed, the average diameter of the fiber in the heat-resistant layer is 340 nm, the surface density of the heat-resistant layer is 3.3 g/m$^2$, and the porosity is 82%. Moreover, the transverse stretching strength and the longitudinal stretching strength of the lithium-ion battery separator are respectively 120 Mpa and 125 MPa, the needling strength is 0.52 kgf, and the ion conductivity is 6.9 mS/cm. The lithium-ion battery separator is baked for 1h at 120°C, 140°C, 160°C, and 180°C, transverse thermal contraction percentages are respectively: 0%, 0%, 3.2%, and 6.2%, and longitudinal thermal contraction percentages are respectively: 0%, 0%, 3.8%, and 6.8%.

Embodiment 13 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A self-crosslinking pure acrylic emulsion (which is commercially available from Shanghai Aigao Chemical Co., Ltd. and whose trade mark is 1040), a self-crosslinking pure acrylic emulsion (which is commercially available from Shanghai Aigao Chemical Co., Ltd. and whose trade mark is 1005), and a self-crosslinking styrene acrylic emulsion (which is commercially available from Shanghai Aigao Chemical Co., Ltd. and whose trade mark is S601) whose solid contents are in a mass ratio of 9:1:10 are mixed, an appropriate amount of water is added, and stirring is performed evenly to prepare a bonding layer slurry whose total solid content is 1 wt%.

The foregoing bonding layer slurry is sprayed onto two side surfaces of the foregoing composite membrane and one side surface of a PE basement membrane by using a spraying method (at a temperature of 40°C), and then drying is performed at 50°C, to respectively obtain a lithium-ion battery separator Sa1 including a porous self-crosslinking polymer membrane (bonding layer) and a porous self-crosslinking polymer membrane Sb1 on the PE basement membrane, where for each porous self-crosslinking polymer membrane, the single-sided surface density is 0.1 $g/m^2$, the single-sided thickness is 0.2 $\mu$m, the porosity is 62%, and the liquid absorption rate is 263%, and the ion conductivity of the lithium-ion battery separator Sa1 is 8.28 mS/cm.

Embodiment 14 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A copolymer emulsion of vinylidene fluoride and hexafluoropropylene (which is commercially available from Arkema and whose trade mark is 10278), a self-crosslinking pure acrylic emulsion (which is commercially available from Shanghai Aigao Chemical Co., Ltd. and whose trade mark is 1005), and a self-crosslinking styrene acrylic emulsion (which is commercially available from Shanghai Aigao Chemical Co., Ltd. and whose trade mark is S601) whose solid contents are in a mass ratio of 12:4:4 are mixed, and an appropriate amount of water is added, and stirring is performed evenly to prepare a bonding layer slurry whose total solid content is 5 wt%.

The foregoing bonding layer slurry is printed onto two side surfaces of the foregoing composite membrane and one side surface of a PE basement membrane by using a screen-printing method (at a temperature of 75°C), and then drying is performed at 50°C, to respectively obtain a lithium-ion battery separator Sa2 including a porous self-crosslinking polymer membrane and a porous self-crosslinking polymer membrane Sb2 on the PE basement membrane, where for each porous self-crosslinking polymer membrane, the single-sided surface density is 0.2 $g/m^2$, the single-sided thickness is 0.4 $\mu$m, the porosity is 48%, and the liquid absorption rate is 192%, and the ion conductivity of the lithium-ion battery separator Sa2 is 7.4 mS/cm.

Embodiment 15 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A self-crosslinking pure acrylic emulsion (which is commercially available from Shanghai Aigao Chemical Co., Ltd. and whose trade mark is 1040), a copolymer emulsion of vinylidene fluoride and hexafluoropropylene (which is commercially available from Arkema and whose trade mark is 10278), a self-crosslinking pure acrylic emulsion (which is commercially available from Shanghai Aigao Chemical Co., Ltd. and whose trade mark is 1005), and a self-crosslinking styrene acrylic emulsion (which is commercially available from Shanghai Aigao Chemical Co., Ltd. and whose trade mark is S601) whose solid contents are in a mass ratio of 12:6:1:1 are mixed, and an appropriate amount of water is added, and stirring is performed evenly to prepare a bonding layer slurry whose total solid content is 10 wt%.

The foregoing bonding layer slurry is sprayed onto two side surfaces of the foregoing composite membrane and one side surface of a PE basement membrane by using a spraying method (at a temperature of 58°C), and then drying is performed at 50°C, to respectively obtain a lithium-ion battery separator Sa3 including a porous self-crosslinking polymer membrane (bonding layer) and a porous self-crosslinking polymer membrane Sb3 on the PE basement membrane, where for each porous self-crosslinking polymer membrane, the single-sided surface density is 0.3 g/m$^2$, the single-sided thickness is 0.3 $\mu$m, the porosity is 51%, and the liquid absorption rate is 300%, and the ion conductivity of the lithium-ion battery separator Sa3 is 7 mS/cm.

Embodiment 16 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.
A ceramic membrane and a heat-resistant layer are prepared according to the method in Embodiment 2, to obtain a composite membrane.
A self-crosslinking pure acrylic emulsion (which is commercially available from Shanghai Aigao Chemical Co., Ltd. and whose trade mark is 1040), a copolymer emulsion of vinylidene fluoride and hexafluoropropylene (which is commercially available from Arkema and whose trade mark is 10278), and a self-crosslinking pure acrylic emulsion (which is commercially available from Shanghai Aigao Chemical Co., Ltd. and whose trade mark is 1005) whose solid contents are in a mass ratio of 12.7:6.3:1 are mixed, and an appropriate amount of water is added, and stirring is performed evenly to prepare a bonding layer slurry whose total solid content is 1 wt%.
The foregoing bonding layer slurry is printed onto two side surfaces of the foregoing composite membrane and one side surface of a PE basement membrane by using a screen-printing method (at a temperature of 40°C), and then drying is performed at 50°C, to respectively obtain a lithium-ion battery separator Sa4 including a porous self-crosslinking polymer membrane and a porous self-crosslinking polymer membrane Sb4 on the PE basement membrane, where for each porous self-crosslinking polymer membrane, the single-sided surface density is 0.1 g/m$^2$, the single-sided thickness is 0.2 $\mu$m, the porosity is 53%, and the liquid absorption rate is 311%, and the ion conductivity of the lithium-ion battery separator Sa4 is 7.46 mS/cm.

Embodiment 17 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.
A ceramic membrane and a heat-resistant layer are prepared according to the method in Embodiment 2, to obtain a composite membrane.
A self-crosslinking pure acrylic emulsion (which is commercially available from Shanghai Aigao Chemical Co., Ltd. and whose trade mark is 1040), a self-crosslinking pure acrylic emulsion (which is commercially available from Shanghai Aigao Chemical Co., Ltd. and whose trade mark is 1005), and a self-crosslinking styrene acrylic emulsion (which is commercially available from Shanghai Aigao Chemical Co., Ltd. and whose trade mark is S601) whose solid contents are in a mass ratio of 6:1:13 are mixed, an appropriate amount of water is added, and stirring is performed evenly to prepare a bonding layer slurry whose total solid content is 5 wt%.
The foregoing bonding layer slurry is sprayed onto two side surfaces of the foregoing composite membrane and one side surface of a PE basement membrane by using a spraying method (at a temperature of 75°C), and then drying is performed at 50°C, to respectively obtain a lithium-ion battery separator Sa5 including a porous self-crosslinking polymer membrane (bonding layer) and a porous self-crosslinking polymer membrane Sb5 on the PE basement membrane, where for each porous self-crosslinking polymer membrane, the single-sided surface density is 0.2 g/m$^2$, the single-sided thickness is 0.3 $\mu$m, the porosity is 46%, and the liquid absorption rate is 220%, and the ion conductivity of the lithium-ion battery separator Sa5 is 7.15 mS/cm.

Embodiment 18 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.
A ceramic membrane and a heat-resistant layer are prepared according to the method in Embodiment 2, to obtain a composite membrane.
A self-crosslinking pure acrylic emulsion (which is commercially available from Shanghai Aigao Chemical Co.,

Ltd. and whose trade mark is 1040), a copolymer emulsion of vinylidene fluoride and hexafluoropropylene (which is commercially available from Arkema and whose trade mark is 10278), and a self-crosslinking pure acrylic emulsion (which is commercially available from Shanghai Aigao Chemical Co., Ltd. and whose trade mark is 1005) whose solid contents are in a mass ratio of 11.4:7.6:1 are mixed, and an appropriate amount of water is added, and stirring is performed evenly to prepare a bonding layer slurry whose total solid content is 10 wt%.

The foregoing bonding layer slurry is printed onto two side surfaces of the foregoing composite membrane and one side surface of a PE basement membrane by using a screen-printing method (at a temperature of 75°C), and then drying is performed at 50°C, to respectively obtain a lithium-ion battery separator Sa6 including a porous self-crosslinking polymer membrane and a porous self-crosslinking polymer membrane Sb6 on the PE basement membrane, where for each porous self-crosslinking polymer membrane, the single-sided surface density is 0.3 $g/m^2$, the single-sided thickness is 0.6 $\mu m$, the porosity is 55%, and the liquid absorption rate is 287%, and the ion conductivity of the lithium-ion battery separator Sa6 is 7.81 mS/cm.

Embodiment 19 (lithium-ion battery separator of a four-layered structure of bonding layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A self-crosslinking pure acrylic emulsion (which is commercially available from Shanghai Aigao Chemical Co., Ltd. and whose trade mark is 1040), a copolymer emulsion of vinylidene fluoride and hexafluoropropylene (which is commercially available from Arkema and whose trade mark is 10278), and a self-crosslinking pure acrylic emulsion (which is commercially available from Shanghai Aigao Chemical Co., Ltd. and whose trade mark is 1005) whose solid contents are in a mass ratio of 9.5:9.5:1 are mixed, and an appropriate amount of water is added, and stirring is performed evenly to prepare a bonding layer slurry whose total solid content is 1 wt%.

The foregoing bonding layer slurry is sprayed onto two side surfaces of the foregoing composite membrane and one side surface of a PE basement membrane by using a spraying method (at a temperature of 40°C), and then drying is performed at 50°C, to respectively obtain a lithium-ion battery separator Sa7 including a porous self-crosslinking polymer membrane (bonding layer) and a porous self-crosslinking polymer membrane Sb7 on the PE basement membrane, where for each porous self-crosslinking polymer membrane, the single-sided surface density is 0.1 $g/m^2$, the single-sided thickness is 0.2 $\mu m$, the porosity is 59%, and the liquid absorption rate is 252%, and the ion conductivity of the lithium-ion battery separator Sa7 is 7.95 mS/cm.

Embodiment 20 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A copolymer emulsion of vinylidene fluoride and hexafluoropropylene (which is commercially available from Arkema and whose trade mark is 10278) and a self-crosslinking pure acrylic emulsion (which is commercially available from Shanghai Aigao Chemical Co., Ltd. and whose trade mark is 1005) whose solid contents are in a mass ratio of 19:1 are mixed, and an appropriate amount of water is added, and stirring is performed evenly to prepare a bonding layer slurry whose total solid content is 5 wt%.

The foregoing bonding layer slurry is printed onto two side surfaces of the foregoing composite membrane and one side surface of a PE basement membrane by using a screen-printing method (at a temperature of 75°C), and then drying is performed at 50°C, to respectively obtain a lithium-ion battery separator Sa8 including a porous self-crosslinking polymer membrane and a porous self-crosslinking polymer membrane Sb8 on the PE basement membrane, where for each porous self-crosslinking polymer membrane, the single-sided surface density is 0.2 $g/m^2$, the single-sided thickness is 0.3 $\mu m$, the porosity is 53%, and the liquid absorption rate is 76%, and the ion conductivity of the lithium-ion battery separator Sa8 is 7.58 mS/cm.

Embodiment 21 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A copolymer emulsion of vinylidene fluoride and hexafluoropropylene (which is commercially available from Arkema and whose trade mark is 10278) and a self-crosslinking pure acrylic emulsion (which is commercially available from Shanghai Aigao Chemical Co., Ltd. and whose trade mark is 1005) whose solid contents are in a mass ratio of 18:2 are mixed, and an appropriate amount of water is added, and stirring is performed evenly to prepare a bonding layer slurry whose total solid content is 10 wt%.

The foregoing bonding layer slurry is sprayed onto two side surfaces of the foregoing composite membrane and one side surface of a PE basement membrane by using a spraying method (at a temperature of 58°C), and then drying is performed at 50°C, to respectively obtain a lithium-ion battery separator Sa9 including a porous self-crosslinking polymer membrane (bonding layer) and a porous self-crosslinking polymer membrane Sb9 on the PE basement membrane, where for each porous self-crosslinking polymer membrane, the single-sided surface density is 0.3 g/m$^2$, the single-sided thickness is 0.6 $\mu$m, the porosity is 47%, and the liquid absorption rate is 112%, and the ion conductivity of the lithium-ion battery separator Sa9 is 7.28 mS/cm.

Embodiment 22 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A bonding layer slurry is prepared according to the method in Embodiment 13, and a difference is in that, the bonding layer slurry further contains a copolymer emulsion of acrylonitrile and acrylate (which is commercially available from Shanghai Aigao Chemical Co., Ltd. and whose trade mark is A1030, where a polyacrylonitrile chain segment accounts for 15 wt%, a polybutyl acrylate chain segment accounts for 30 wt%, a polymethyl methacrylate chain segment accounts for 45 wt%, a polyethylene acrylate chain segment accounts for 5 wt%, a polyacrylic acid chain segment accounts for 5 wt%, the glass transition temperature Tg=28°C, and the solid content is 50 wt%), and a weight ratio of the solid content of A1030 to the total solid content of 1040 and 1005 is 1:1.

A bonding layer is formed by using the bonding layer slurry according to the method in Embodiment 13, to obtain a lithium-ion battery separator Sa10 including a porous self-crosslinking polymer membrane and a porous self-crosslinking polymer membrane Sb10 on a PE basement membrane, where for each porous self-crosslinking polymer coating, the single-sided surface density is 0.1 g/m$^2$, the single-sided thickness is 0.2 $\mu$m, the porosity is 48%, and the liquid absorption rate is 293%, and the ion conductivity of the lithium-ion battery separator Sa10 is 7.68 mS/cm.

Embodiment 23 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A bonding layer slurry is prepared according to the method in Embodiment 13, and a difference is in that, the bonding layer slurry further contains a copolymer emulsion of acrylonitrile and acrylate (which is commercially available from Shanghai Aigao Chemical Co., Ltd. and whose trade mark is A1030, where a polyacrylonitrile chain segment accounts for 15 wt%, a polybutyl acrylate chain segment accounts for 30 wt%, a polymethyl methacrylate chain segment accounts for 45 wt%, a polyethylene acrylate chain segment accounts for 5 wt%, a polyacrylic acid chain segment accounts for 5 wt%, the glass transition temperature Tg=28°C, and the solid content is 50 wt%), and a weight ratio of the solid content of A1030 to the total solid content of 1040 and 1005 is 1:1.

A bonding layer is formed by using the bonding layer slurry according to the method in Embodiment 13, to obtain a lithium-ion battery separator Sa11 including a porous self-crosslinking polymer membrane and a porous self-crosslinking polymer membrane Sb11 on a PE basement membrane, where for each porous self-crosslinking polymer coating, the single-sided surface density is 0.1 g/m$^2$, the single-sided thickness is 0.2 $\mu$m, the porosity is 50%, and the liquid absorption rate is 214%, and the ion conductivity of the lithium-ion battery separator Sa11 is 7.18 mS/cm.

Embodiment 24 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A bonding layer slurry is prepared according to the method in Embodiment 13, and a difference is in that, the bonding layer slurry further contains a copolymer emulsion of acrylonitrile and acrylate (which is commercially available from Shanghai Aigao Chemical Co., Ltd. and whose trade mark is A1030, where a polyacrylonitrile chain segment accounts for 15 wt%, a polybutyl acrylate chain segment accounts for 30 wt%, a polymethyl methacrylate chain segment accounts for 45 wt%, a polyethylene acrylate chain segment accounts for 5 wt%, a polyacrylic acid chain segment accounts for 5 wt%, the glass transition temperature Tg=28°C, and the solid content is 50 wt%), and a weight ratio of the solid content of A1030 to the total solid content of 1040 and 1005 is 1:1.

A bonding layer is formed by using the bonding layer slurry according to the method in Embodiment 13, to obtain a lithium-ion battery separator Sa12 including a porous self-crosslinking polymer membrane and a porous self-crosslinking polymer membrane Sb12 on a PE basement membrane, where for each porous self-crosslinking polymer coating, the single-sided surface density is 0.1 g/m$^2$, the single-sided thickness is 0.2 $\mu$m, the porosity is 46%, and the liquid absorption rate is 182%, and the ion conductivity of the lithium-ion battery separator Sa12 is 7.27 mS/cm.

Embodiment 25 (lithium-ion battery separator of a five-layered structure of bonding layer-heat-resistant layer-porous basement membrane (ceramic membrane)-heat-resistant layer-bonding layer)

This embodiment is used to describe a lithium-ion battery separator and a method for preparing same provided in the disclosure.

A ceramic membrane and a heat-resistant layer are prepared according to the method in Embodiment 2, to obtain a composite membrane.

A bonding layer slurry is prepared according to the method in Embodiment 14, and a difference is in that, the self-crosslinking pure acrylic emulsion 1005 is replaced with the self-crosslinking pure acrylic emulsion 1020 having same parts by weight.

A bonding layer is formed by using the bonding layer slurry according to the method in Embodiment 12, to obtain a lithium-ion battery separator Sa13 including a porous self-crosslinking polymer membrane and a porous self-crosslinking polymer membrane Sb13 on a PE basement membrane, where for each porous self-crosslinking polymer coating, the single-sided surface density is 0.2 g/m$^2$, the single-sided thickness is 0.4 $\mu$m, the porosity is 47%, and the liquid absorption rate is 160%, and the ion conductivity of the lithium-ion battery separator Sa13 is 6.98 mS/cm.

Implementation comparison example of a bonding layer (lithium-ion battery separator of a five-layered structure of bonding layer-heat-resistant layer-porous basement membrane (ceramic membrane)-heat-resistant layer-bonding layer)

This embodiment is a comparison embodiment, and is used to describe a polymer composite membrane when a bonding layer is a non-optional bonding layer and a method for preparing same.

A ceramic membrane and a heat-resistant layer are prepared according to the method in Embodiment 2, to obtain a composite membrane.

A bonding layer slurry is prepared according to the method in Embodiment 13, and a difference is in that, a method for forming a bonding layer is a blade coating method, and a lithium-ion battery separator Sa14 including a porous self-crosslinking polymer membrane and a porous self-crosslinking polymer membrane Sb14 on a PE basement membrane are respectively obtained, where for each porous self-crosslinking polymer membrane (bonding layer), the single-sided surface density is 1 g/m$^2$, and the single-sided thickness is 2 $\mu$m. Through testing, the porosity of the foregoing prepared porous self-crosslinking polymer membrane Sb14 is 0%, the liquid absorption rate is 156%, and the conductivity is 5.25 mS/cm. Through testing, the ion conductivity of the foregoing prepared lithium-ion battery separator Sa14 is 5.05 mS/cm.

The implementations of the disclosure are described in detail above. However, the disclosure is not limited to specific details in the foregoing implementations. Within the scope of the technical idea of the disclosure, a plurality of simple variances may be performed on the technical solutions of the disclosure, and these simple variances all fall within the protection scope of the disclosure.

In addition, it should be noted that, specific technical features described in the foregoing specific implementations may be combined in any appropriate manner without conflict. To avoid unnecessary repetition, various possible combination manners are not further described in the disclosure.

Moreover, various different implementations of the disclosure may also be randomly combined with each other.

Provided that the combination does not depart from the idea of the disclosure, the combination should be similarly considered as the content disclosed in the disclosure.

**Claims**

1. A lithium-ion battery separator, comprising:
   a porous basement membrane, and a heat-resistant layer covering at least one side surface of the porous basement membrane, wherein the heat-resistant layer contains a high-temperature-resistant polymer and inorganic nanometer particles, and the heat-resistant layer has a fiber-network shaped structure.

2. The lithium-ion battery separator according to claim 1, wherein a weight ratio of the high-temperature-resistant polymer to the inorganic nanometer material is 100:(3 to 50); or a weight ratio of the high-temperature-resistant polymer to the inorganic nanometer material is 100:(5 to 18).

3. The lithium-ion battery separator according to claim 1, wherein the heat-resistant layer is formed by a high-temperature-resistant polymer and an inorganic nanometer material, and the average diameter of a fiber in the heat-resistant layer is 100 nm to 2000 nm.

4. The lithium-ion battery separator according to claim 1, wherein the porosity of the heat-resistant layer is above 80%, and the single-sided surface density of the heat-resistant layer is 0.2 $g/m^2$ to 15 $g/m^2$.

5. The lithium-ion battery separator according to claim 1, wherein the heat-resistant layer is formed through electrostatic spinning by using a spinning solution containing a high-temperature-resistant polymer and inorganic nanometer particles.

6. The lithium-ion battery separator according to claim 1, wherein the melting point of the high-temperature-resistant polymer is not lower than 180°C, or the melting point of the high-temperature-resistant polymer is 200°C to 600°C.

7. The lithium-ion battery separator according to claim 1, wherein the high-temperature-resistant polymer is at least one of polyetherimide, polyimide, polyetheretherketone, polyether sulfone, polyamide-imide, polyamide acid, and polyvinylpyrrolidone; or the high-temperature-resistant polymer is at least one of polyetherimide and polyetherether ketone.

8. The lithium-ion battery separator according to claim 1, wherein the average particle size of the inorganic nanometer particle is 50 nm to 3 $\mu$m; and the inorganic nanometer particle is at least one of $Al_2O_3$, $SiO_2$, $BaSO_4$, $TiO_2$, CuO, MgO, $LiAlO_2$, $ZrO_2$, CNT, BN, SiC, $Si_3N_4$, WC, BC, AlN, $Fe_2O_3$, $BaTiO_3$, $MoS_2$, $\alpha$-$V_2O_5$, $PbTiO_3$, $TiB_2$, $CaSiO_3$, molecular sieve, clay, and kaolin.

9. The lithium-ion battery separator according to claim 1, wherein the porous basement membrane is a polymer membrane, and the polymer membrane is a polyolefin membrane; or the porous basement membrane is a ceramic membrane, and the ceramic membrane comprises a polymer membrane and a ceramic layer that is located on at least one side surface of the polymer membrane; the heat-resistant layer is located on a surface on a side of the ceramic membrane on which a ceramic layer is formed.

10. The lithium-ion battery separator according to any one of claims 1 to 9, wherein the lithium-ion battery separator further comprises a bonding layer, the bonding layer is formed on an outermost side of at least one side surface of the lithium-ion battery separator, the bonding layer contains an acrylate crosslinked polymer and a styrene-acrylate crosslinked copolymer ,or the bonding layer contains an acrylate crosslinked polymer and a vinylidene fluoride-hexafluoropropylene copolymer, or the bonding layer contains an acrylate crosslinked polymer a styrene-acrylate crosslinked copolymer and a vinylidene fluoride-hexafluoropropylene copolymer ;and the porosity of the bonding layer is 40% to 65%.

11. The lithium-ion battery separator according to claim 10, wherein the glass transition temperature of the acrylate crosslinked polymer is -20°C to 60°C, the glass transition temperature of the styrene-acrylate crosslinked copolymer is -30°C to 50°C, and the glass transition temperature of the vinylidene fluoride-hexafluoropropylene copolymer is -65°C to - 40°C.

**12.** The lithium-ion battery separator according to claim 11, wherein
the bonding layer contains the acrylate crosslinked polymer and the styrene-acrylate crosslinked copolymer and does not contain the vinylidene fluoride-hexafluoropropylene copolymer, and a weight ratio of the acrylate crosslinked polymer to the styrene-acrylate crosslinked copolymer is (1:0.05) to (1:2); or
the bonding layer contains the acrylate crosslinked polymer and the vinylidene fluoride-hexafluoropropylene copolymer and does not contain the styrene-acrylate crosslinked copolymer, and a weight ratio of the acrylate crosslinked polymer to the vinylidene fluoride-hexafluoropropylene copolymer is (1:0.3) to (1:25); or
the bonding layer contains the acrylate crosslinked polymer, the styrene-acrylate crosslinked copolymer, and the vinylidene fluoride-hexafluoropropylene copolymer, and a weight ratio of the acrylate crosslinked polymer to the styrene-acrylate crosslinked copolymer to the vinylidene fluoride-hexafluoropropylene copolymer is 1:(0.01 to 2):(0.3 to 5).

**13.** The lithium-ion battery separator according to claim 12, wherein
the acrylate crosslinked polymer is a mixture of a first acrylate crosslinked polymer and a second acrylate crosslinked polymer , or the acrylate crosslinked polymer is a mixture of a first acrylate crosslinked polymer and a third acrylate crosslinked polymer, or the acrylate crosslinked polymer is a mixture of a first acrylate crosslinked polymer, a second acrylate crosslinked polymer and a third acrylate crosslinked polymer, or the acrylate crosslinked polymer is the second acrylate crosslinked polymer, or the acrylate crosslinked polymer is the third acrylate crosslinked polymer, wherein
the first acrylate crosslinked polymer contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, the second acrylate crosslinked polymer contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and the third acrylate crosslinked polymer contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; the glass transition temperature of the first acrylate crosslinked polymer is 50°C to 60°C, the glass transition temperature of the second acrylate crosslinked polymer is -20°C to -5°C, and the glass transition temperature of the third acrylate crosslinked polymer is 30°C to 50°C;
the styrene-acrylate crosslinked copolymer contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; and the glass transition temperature of the styrene-acrylate crosslinked copolymer is 15°C to 30°C; and
the vinylidene fluoride-hexafluoropropylene copolymer contains a polyvinylidene fluoride chain segment of 80 to 98 wt% and a polyhexafluoropropylene chain segment of 2 to 20 wt%; and the glass transition temperature of the vinylidene fluoride-hexafluoropropylene copolymer is -60°C to -40°C.

**14.** The lithium-ion battery separator according to claim 12, wherein the bonding layer contains a first acrylate crosslinked polymer, a second acrylate crosslinked polymer, and the styrene-acrylate crosslinked copolymer and does not contain the vinylidene fluoride-hexafluoropropylene copolymer, and a weight ratio of the first acrylate crosslinked polymer to the second acrylate crosslinked polymer to the styrene-acrylate crosslinked copolymer is (5 to 10):1:(10 to 13); or
the bonding layer contains the first acrylate crosslinked polymer, the second acrylate crosslinked polymer, and the vinylidene fluoride-hexafluoropropylene copolymer and does not contain the styrene-acrylate crosslinked copolymer, and a weight ratio of the first acrylate crosslinked polymer to the second acrylate crosslinked polymer to the vinylidene fluoride-hexafluoropropylene copolymer is (5 to 15):1:(5 to 12); or
the bonding layer contains the second acrylate crosslinked polymer and the vinylidene fluoride-hexafluoropropylene copolymer and does not contain the styrene-acrylate crosslinked copolymer, and a weight ratio of the second acrylate crosslinked polymer to the vinylidene fluoride-hexafluoropropylene copolymer is (1:5) to (1:20); or
the bonding layer contains the second acrylate crosslinked polymer, the styrene-acrylate crosslinked copolymer, and the vinylidene fluoride-hexafluoropropylene copolymer, and a weight ratio of the second acrylate crosslinked polymer to the styrene-acrylate crosslinked copolymer to the vinylidene fluoride-hexafluoropropylene copolymer is 1:(0.5 to 2):(1 to 5); or the bonding layer contains a third acrylate crosslinked polymer, the styrene-acrylate crosslinked copolymer, and the vinylidene fluoride-hexafluoropropylene copolymer, and a weight ratio of the third acrylate crosslinked polymer to the styrene-acrylate crosslinked copolymer to the vinylidene fluoride-hexafluoropropylene copolymer is 1:(0.5 to 2):(1 to 5); or
the bonding layer contains the first acrylate crosslinked polymer, the second acrylate crosslinked polymer, the styrene-acrylate crosslinked copolymer, and the vinylidene fluoride-hexafluoropropylene copolymer, and a weight ratio of the first acrylate crosslinked polymer to the second acrylate crosslinked polymer to the styrene-acrylate crosslinked copolymer to the vinylidene fluoride-hexafluoropropylene copolymer is (10 to 15):1:(0.5 to 2):(5 to 10), wherein

the first acrylate crosslinked polymer contains a polymethyl methacrylate chain segment of 70 to 80 wt%, a polyethylene acrylate chain segment of 2 to 10 wt%, a polybutyl acrylate chain segment of 10 to 20 wt%, and a polyacrylic acid chain segment of 2 to 10 wt%, the second acrylate crosslinked polymer contains a polymethyl methacrylate chain segment of 30 to 40 wt%, a polyethylene acrylate chain segment of 2 to 10 wt%, a polybutyl acrylate chain segment of 50 to 60 wt%, and a polyacrylic acid chain segment of 2 to 10 wt%, and the third acrylate crosslinked polymer contains a polymethyl methacrylate chain segment of 50 to 80 wt%, a polyethylene acrylate chain segment of 2 to 10 wt%, a polybutyl acrylate chain segment of 15 to 40 wt%, and a polyacrylic acid chain segment of 2 to 10 wt%; the styrene-acrylate crosslinked copolymer contains a polyphenyl ethylene chain segment of 40 to 50 wt%, a polymethyl methacrylate chain segment of 5 to 15 wt%, a polyethylene acrylate chain segment of 2 to 10 wt%, a polybutyl acrylate chain segment of 30 to 40 wt%, and a polyacrylic acid chain segment of 2 to 10 wt%; the vinylidene fluoride-hexafluoropropylene copolymer contains a polyvinylidene fluoride chain segment of 80 to 98 wt% and a polyhexafluoropropylene chain segment of 2 to 20 wt%; and the glass transition temperature of the first acrylate crosslinked polymer is 50°C to 60°C, the glass transition temperature of the second acrylate crosslinked polymer is -20°C to -5°C, the glass transition temperature of the third acrylate crosslinked polymer is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

15. The lithium-ion battery separator according to claim 12, wherein the bonding layer further contains at least one of an acrylonitrile-acrylate copolymer, a vinyl chloride-propylene copolymer, and a butadiene-styrene copolymer; when the bonding layer further contains the acrylonitrile-acrylate copolymer, a weight ratio of the acrylonitrile-acrylate copolymer to the acrylate crosslinked polymer is (0.05:1) to (2:1); or

when the bonding layer further contains the vinyl chloride-propylene copolymer, a weight ratio of the vinyl chloride-propylene copolymer to the acrylate crosslinked polymer is (0.15:1) to (7:1); or

when the bonding layer further contains the butadiene-styrene copolymer, a weight ratio of the butadiene-styrene copolymer to the acrylate crosslinked polymer is (0.05:1) to (2:1).

16. The lithium-ion battery separator according to claim 12, wherein the single-sided surface density of the bonding layer is 0.05 mg/cm$^2$ to 0.9 mg/cm$^2$; and the single-sided thickness of the bonding layer is 0.1 $\mu$m to 1 $\mu$m.

17. A method for preparing a lithium-ion battery separator, wherein the method comprises the following steps:

S1: providing a porous basement membrane; and
S2: preparing a spinning solution containing a high-temperature-resistant polymer and inorganic nanometer particles, and forming a heat-resistant layer on at least one side surface of the porous basement membrane through electrostatic spinning by using the spinning solution, wherein
in the spinning solution, a weight ratio of the high-temperature-resistant polymer to an inorganic nanometer material is 100:(3 to 50); and is In some embodiments of the present disclosure 100:(5 to 18).

18. The preparation method according to claim 17, further comprising: a step of performing membrane lamination at 50°C to 120°C and at 0.5 MPa to 15 MPa after electrostatic spinning; wherein the porous basement membrane is a ceramic membrane, and the ceramic membrane comprises a polymer membrane and a ceramic layer that is located on a surface of the polymer membrane; and the heat-resistant layer is formed on a surface of the ceramic layer of the ceramic membrane.

19. The preparation method according to any one of claims 17 to 18, further comprising: S3:
forming a bonding layer on at least one side surface of a composite membrane obtained in step S2.

20. A lithium-ion battery, wherein the lithium-ion battery comprises a positive electrode, a negative electrode, an electrolyte, and a membrane, wherein the membrane is the lithium-ion battery separator according to any one of claims 1 to 18 and 36.

X 10,000    15.0kV SEM    WD 7.8mm    1μm

FIG. 1

X 5,000    15.0kV SEM    WD 7.8mm    1μm

FIG. 2

# INTERNATIONAL SEARCH REPORT

| | |
|---|---|
| International application No. | |
| | PCT/CN2017/097404 |

## A. CLASSIFICATION OF SUBJECT MATTER

H01M 2/14 (2006.01) i

According to International Patent Classification (IPC) or to both national classification and IPC

## B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)
WPI; EPODOC; CNKI; CNABS; CNTXT; ISI Web of Knowledge: 锂离子, 电池, 隔膜, 耐热, 耐高温, 聚合物, 纤维, 无机, 纳米, 陶瓷, 颗粒, 静电, 纺丝, 聚醚酰亚胺, 聚酰亚胺, 聚醚醚酮, 聚醚砜, 聚酰胺酰亚胺, 聚酰胺酸, 聚乙烯吡咯烷酮, 粘结, 分散, lithium, battery, film, membrane, diaphragm, layer, fiber, fibre, poly+, polyimide, PI, polyetherimide, PEI, ether, ketone, polyethersulfone, PES, polyvinyl pyrrolidone, pvp, nano+, inorganic, particle?, static, spin+

## C. DOCUMENTS CONSIDERED TO BE RELEVANT

| Category* | Citation of document, with indication, where appropriate, of the relevant passages | Relevant to claim No. |
|---|---|---|
| PX | CN 206210903 U (BYD COMPANY LIMTED), 31 May 2017 (31.05.2017), description, paragraphs 36-65, and figures 1-3 | 1-38 |
| X | CN 102629679 A (TECHNICAL INSTITUTE OF PHYSICS AND CHEMISTRY, CAS), 08 August 2012 (08.08.2012), description, paragraphs 8-24 | 1-9, 19-24, 36-38 |
| Y | CN 102629679 A (TECHNICAL INSTITUTE OF PHYSICS AND CHEMISTRY, CAS), 08 August 2012 (08.08.2012), description, paragraphs 8-24 | 9-18, 25-38 |
| Y | CN 104681764 A (LONGYAN BAUHINIA INNOVATION INSTITUTE), 03 June 2015 (03.06.2015), description, paragraphs 2 and 5-11 | 9-18, 25-38 |
| Y | CN 202888286 U (ATOP NEW MATERIALS CO., LTD.), 17 April 2013 (17.04.2013), description, paragraphs 11-16 | 12-18, 25-38 |
| A | CN 103474610 A (TIANJIN POLYTECHNIC UNIVERSITY), 25 December 2013 (25.12.2013), description, paragraphs 8-20, and figures 1-2 | 1-38 |
| A | CN 104766938 A (LONGYAN BAUHINIA INNOVATION INSTITUTE), 08 July 2015 (08.07.2015), description, paragraphs 5-28 | 1-38 |

☒ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 October 2017 | 14 November 2017 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHANG, Han Telephone No. (86-10) 62413924 |

Form PCT/ISA/210 (second sheet) (July 2009)

## INTERNATIONAL SEARCH REPORT

| International application No. |
| --- |
| PCT/CN2017/097404 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | CN 102242464 A (TECHNICAL INSTITUTE OF PHYSICS AND CHEMISTRY, CAS), 16 November 2011 (16.11.2011), description, paragraphs 6-27, and figures 1-3 | 1-38 |
| A | CN 105619991 A (DONGHUA UNIVERSITY), 01 June 2016 (01.06.2016), description, paragraphs 7-30 | 1-38 |
| A | WO 2012050682 A2 (APPLIED MATERIALS INC. et al.), 19 April 2012 (19.04.2012), description, paragraphs 29-66 and 74-79, and figures 1-10 and 13-15 | 1-38 |
| A | US 2006286446 A1 (SAMSHIN CREATION CO., LTD.), 21 December 2006 (21.12.2006), description, paragraphs 18-57, and figures 1-2 | 1-38 |

Form PCT/ISA/210 (continuation of second sheet) (July 2009)

## INTERNATIONAL SEARCH REPORT
### Information on patent family members

| International application No. |
|---|
| PCT/CN2017/097404 |

| Patent Documents referred in the Report | Publication Date | Patent Family | Publication Date |
|---|---|---|---|
| CN 206210903 U | 31 May 2017 | None | |
| CN 102629679 A | 08 August 2012 | WO 2013159752 A1 | 31 October 2013 |
| CN 104681764 A | 03 June 2015 | None | |
| CN 202888286 U | 17 April 2013 | None | |
| CN 103474610 A | 25 December 2013 | None | |
| CN 104766938 A | 08 July 2015 | None | |
| CN 102242464 A | 16 November 2011 | CN 102242464 B | 23 July 2014 |
| CN 105619991 A | 01 June 2016 | None | |
| WO 2012050682 A2 | 19 April 2012 | JP 2013539186 A | 17 October 2013 |
| | | US 2012082884 A1 | 05 April 2012 |
| | | WO 2012050682 A3 | 14 June 2012 |
| | | US 9065122 B2 | 23 June 2015 |
| | | CN 103168384 A | 19 June 2013 |
| | | KR 20130108594 A | 04 October 2013 |
| | | CN 103168384 B | 25 November 2015 |
| | | TW 201230453 A | 16 July 2012 |
| US 2006286446 A1 | 21 December 2006 | JP 2006527911 A | 07 December 2006 |
| | | WO 2004112183 A1 | 23 December 2004 |
| | | JP 4593566 B2 | 08 December 2010 |
| | | US 7875380 B2 | 25 January 2011 |
| | | KR 100470314 B1 | 07 February 2005 |
| | | KR 20040108525 A | 24 December 2004 |

Form PCT/ISA/210 (patent family annex) (July 2009)

**REFERENCES CITED IN THE DESCRIPTION**

**Patent documents cited in the description**

• CN 201610750611

• CN 103474610 A